(19) Europäisches Patentamt
European Patent Office
Office européen des brevets

(11) **EP 2 784 565 B1**

(12) **EUROPEAN PATENT SPECIFICATION**

(45) Date of publication and mention
of the grant of the patent:
**26.04.2017   Bulletin 2017/17**

(51) Int Cl.:
***G02B 21/00*** *(2006.01)*       ***G01J 1/00*** *(2006.01)*
*G02B 21/26* *(2006.01)*

(21) Application number: **14161486.7**

(22) Date of filing: **25.03.2014**

(54) **Optical intensity measurement apparatus**

Messvorrichtung zur Messung optischer Intensitäten

Appareil de mesure d'intensité optique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2013   JP 2013067490
27.03.2013   JP 2013067491
27.03.2013   JP 2013067492
04.03.2014   JP 2014042037**

(43) Date of publication of application:
**01.10.2014   Bulletin 2014/40**

(73) Proprietor: **Olympus Corporation
Tokyo 192-8507 (JP)**

(72) Inventors:
• **Kitahara, Akihiro
Tokyo, 192-8507 (JP)**

• **Ito, Madoka
Tokyo, 192-8507 (JP)**
• **Utsugi, Hironori
Tokyo, 192-8507 (JP)**
• **Kusaka, Kenichi
Tokyo, 192-8507 (JP)**
• **Kobayashi, Mina
Tokyo, 192-8507 (JP)**

(74) Representative: **Gunzelmann, Rainer
Wuesthoff & Wuesthoff
Patentanwälte PartG mbB
Schweigerstraße 2
81541 München (DE)**

(56) References cited:
**EP-A1- 1 605 292       JP-A- H11 258 512
JP-A- 2005 091 701       US-A1- 2011 031 410**

**Description**

BACKGROUND OF THE INVENTION

1. Field of the Invention

The present invention relates to a measurement apparatus used, for example, in a microscope that irradiates illumination light to a specimen and receives reflected and/or transmitted light from the specimen, to perform observation of the specimen.

2. Description of the Related Art

Conventionally, in the fields of medicine, biology, and the like, microscopes for illuminating and observing specimens are used in observation of cells and the like. Further, in the industrial fields, microscopes are used for various purposes, such as quality management of metallographic structures and the like, research and development of new materials, and inspection of electronic devices and magnetic heads. As observation of a specimen using a microscope, in addition to visual observation, observation by capturing a specimen image using an image capture element such as a CCD image sensor or a CMOS image sensor and displaying on a monitor the captured image and numerical values such as optical intensities is known.

Generally, a microscope has a main body unit that forms a base, and an observation unit having a lens barrel to which an eyepiece is attached. Further, in the main body unit: a stage on which a specimen is placed; a revolver that holds interchangeably with respect to the specimen a plurality of objective lenses of different magnifications; a first light source that irradiates reflected illumination light; and a second light source that irradiates transmissive illumination light, are installed, for example.

When the reflected illumination light irradiated from the first light source is used, the illumination light is irradiated to the specimen via the objective lens, the objective lens takes in light of the illumination light transmitted through the specimen or reflected by the specimen, or fluorescence or luminescence generated by the specimen being excited by the illumination light, to obtain observation light, and forms a specimen image by subjecting this observation light to image formation.

When the specimen is observed by irradiating the illumination light as excitation light to the specimen and observing the fluorescence from the specimen, intensity of that fluorescence changes according to intensity of the excitation light. Therefore, if the intensity of the excitation light is constant, the intensity of the fluorescence is able to be made constant too, which is effective for reproducibility of conditions upon fluorescence intensity measurement.

As a technique of controlling intensity of such excitation light, a technique of controlling intensity of illumination light (excitation light) by adjusting a position of a light source or an irradiation optical system provided between the light source and a specimen is disclosed, for example, in Japanese Patent Application Laid-Open No. 2003-121751.

Further, a technique of measuring intensity of light irradiated in the vicinity of a specimen by providing in the vicinity of the specimen a light receiving unit that receives light is disclosed, for example in Japanese Patent Application Laid-Open No. 2005-352146.

Further, a technique is disclosed, for example, in Japanese Patent Application Laid-Open No. 2005-091701, in which a first light intensity detector that is arranged integrally with a light source and measures an intensity of excitation light irradiated from the light source and a second light intensity detector that measures an intensity of the excitation light at an observation position are included, and an intensity of the excitation light is controlled based on the intensities measured by the first and second light intensity detectors.

Further, a technique of detecting by a detector light of excitation light irradiated from a light source, the light which has passed an observation position on a stage and condensed by a condenser lens and controlling intensity of the excitation light based on a result of this detection is disclosed, for example, in Japanese Patent Application Laid-open No. H11-258512.

However, in the above mentioned conventional techniques, numerical values indicating the intensity of the excitation light are numerical values, as is, obtained from the measured values, and an intensity of the excitation light per unit area is not considered. Accordingly, intensity of the excitation light being irradiated on the specimen is unable to be known and when performing observation (measurement) under the same conditions, for example, there is a risk that the intensity of the excitation light is not of a set intensity.

The present invention has been made in view of the above, and an object thereof is to provide a measurement apparatus that is able to know an intensity of light (irradiance) to be irradiated to a specimen accurately.

Document US 2011/0031410 A1 discloses a method for measuring a fluorescent light amount, wherein a light amount value is determined per unit area traceable to the national standard. The teachings of the document US 2011/0031410 A1 relate to a configuration of the light receiving side. A specific method for calibrating excitation light is not described.

SUMMARY OF THE INVENTION

A measurement apparatus according to an aspect of the present invention includes the features of claim 1.
The above and other objects, features, advantages, and technical and industrial significance of the present invention will be better understood by reading the following detailed description of the present invention, when considered in connection with the accompanying drawings.

BRIEF DESCRIPTION OF THE DRAWINGS

FIG. 1 is a side view schematically illustrating a whole configuration of a microscope system according to a first comparative embodiment;

FIG. 2 is a side view schematically illustrating a whole configuration of a microscope system according to a modified example of the first comparative embodiment;

FIG. 3 is a side view schematically illustrating a configuration of main parts of the microscope system according to the modified example of the first comparative embodiment

FIG. 4 is a side view schematically illustrating a whole configuration of a microscope system according to a second comparative embodiment;

FIG. 5 is a diagram schematically illustrating an example of an image displayed by a display device according to a second comparative embodiment;

FIG. 6 is a diagram illustrating obtainment of an area of an image in a microscope according to the second comparative embodiment;

FIG. 7 is a diagram illustrating obtainment of an area of an image in a microscope according to the second comparative embodiment;

FIG. 8 is a partial cross section diagram schematically illustrating a configuration of a stage according to a third comparative embodiment;

FIG. 9 is a partial cross section diagram schematically illustrating the configuration of the stage according to the third comparative embodiment;

FIG. 10 is a partial cross section diagram schematically illustrating a configuration of a stage according to a first modified example of the third comparative embodiment;

FIG. 11 is a partial cross section diagram schematically illustrating the configuration of the stage according to the first modified example of the third comparative embodiment;

FIG. 12 is a partial cross section diagram schematically illustrating a configuration of a stage according to a second modified example of the third comparative embodiment;

FIG. 13 is a partial cross section diagram schematically illustrating the configuration of the stage according to the second modified example of the third comparative embodiment;

FIG. 14 is a partial cross section diagram schematically illustrating a configuration of a stage according to a first embodiment of the present invention;

FIG. 15 is a partial cross section diagram schematically illustrating the configuration of the stage according to the first embodiment of the present invention;

FIG. 16 is a partial cross section diagram schematically illustrating a configuration of a stage according to a modified example of the first embodiment of the present invention;

FIG. 17 is a partial cross section diagram schematically illustrating a configuration of a stage according to a second embodiment of the present invention;

FIG. 18 is a perspective view schematically illustrating the configuration of the stage according to the second embodiment of the present invention;

FIG. 19 is a perspective view schematically illustrating a configuration of main parts of a stage according to a modified example of the second embodiment of the present invention;

FIG. 20 is a perspective view schematically illustrating the configuration of the main parts of the stage according to the modified example of the second embodiment of the present invention;

FIG. 21 is a side view schematically illustrating a whole configuration of a microscope system according to a fourth comparative embodiment;

FIG. 22 is a functional block diagram illustrating functions of a microscope system according to a fourth comparative embodiment;

FIG. 23 is a flow chart illustrating a measurement process executed by a processing device according to a fourth comparative embodiment;

FIG. 24 is a flow chart illustrating a setting process executed by the processing device according to the fourth comparative embodiment; and

FIG. 25 is a flow chart illustrating an automatic adjustment process executed by the processing device according to the fourth comparative embodiment.

DETAILED DESCRIPTION OF THE PREFERRED EMBODIMENTS

Hereinafter, modes for carrying out the present invention (hereinafter, referred to as "embodiment") will be described in detail with the drawings. Comparative embodiments are useful for understanding the present invention which is defined in the claims. The present invention is not limited by the following embodiments. Further, in the following description, each drawing only schematically illustrates shapes, sizes, and positional relations to an extent that allows contents of the present invention to be understandable, and thus the present invention is not to be limited only to the shapes, sizes, and positional relations exemplified in each drawing.

First Embodiment

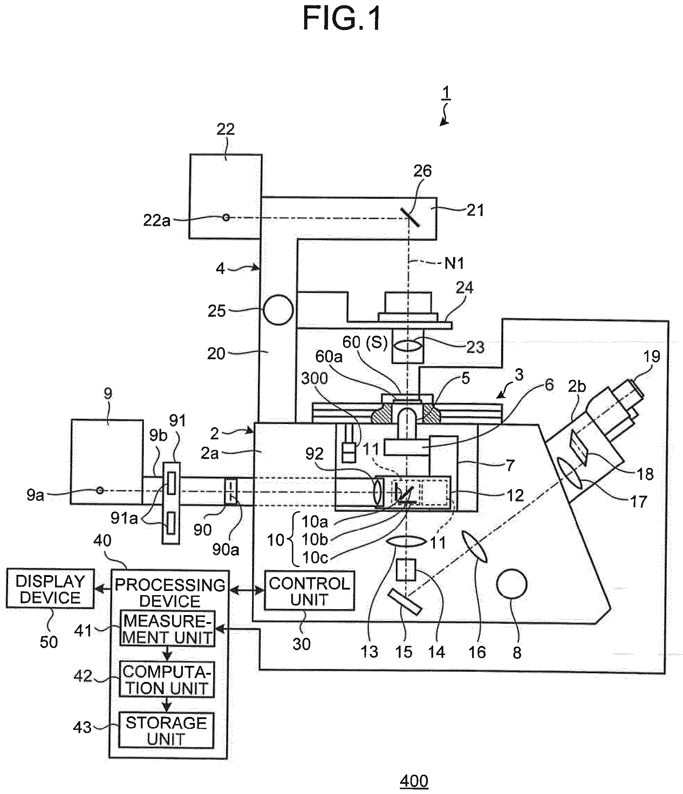

FIG. 1 is a side view schematically illustrating a whole configuration of a microscope system 400 according to a first comparative embodiment. The microscope system 400 is configured of, for example, a microscope 1, a processing device 40, and a display device 50. The microscope 1 illustrated in the same figure includes a main body unit 2 that forms a base, a stage 3 (holding unit) that is attached to a top surface of the main body unit 2 and on which at least a specimen S is placed, and a transmitted-light illumination unit 4 that is positioned above the main body unit 2 and irradiates transmitted-light illumination to the specimen S placed on the stage 3. The specimen S is held by, for example, a dish, a slide glass, a beaker, or the like. Further, the specimen S may be a biological sample such as a biological tissue section, a cell separated from the biological sample, a cultured cell such as a cell line, a culture of the cell separated from the biological sample, a culture of the cultured cell, or the like. The specimen S is fluorescently labeled with a fluorescent pigment and generates fluorescence as the labeled fluorescent pigment is excited by excitation light being irradiated to the specimen S.

The main body unit 2 has a casing unit 2a that supports the stage 3 and the transmitted-light illumination unit 4, and a lens barrel unit 2b provided on a front side (right side of FIG. 1), which is one of lateral sides of the casing unit 2a, this lateral side being provided with an eyepiece and facing a user of the microscope 1

The casing unit 2a has an objective lens 5 that takes in at least observation light from the specimen S on the stage, a revolver (objective lens holding unit) that holds the objective lens 5 interchangeably, a revolver holding unit 7 that holds a revolver 6 and is provided to be vertically movable along an optical axis of the objective lens 5 arranged on an optical path N1, and a focusing operation unit 8 that manually or electrically performs focusing operations of the objective lens 5 attached to the revolver 6, by vertically moving the revolver holding unit 7.

In the first comparative embodiment, the objective lens 5 attached to the revolver 6 is, for example, an objective lens having a comparatively high magnification of 10, 20, or 50 times, or an objective lens of a low magnification of 2 or 5 times.

Further, a first lamp house 9 having a light source 9a that generates reflected illumination light is attached to a back side (left side of FIG. 1) of the casing unit 2a. The casing unit 2a is provided with: a reflected illumination optical system 10 (illumination optical system) for fluorescence that switches optical paths between that of reflected light or transmitted light from the specimen S incident via the objective lens 5 having an optical axis passing the specimen S or the reflected illumination light irradiated from the first lamp house 9; a mirror unit 11 that holds the reflected illumination optical system 10; and a mirror cassette 12 that is able to accommodate a plurality of mirror units 11 respectively holding reflected illumination optical systems 10 of different properties. In the mirror cassette 12, each mirror unit 11 is rotatably arranged, and a desired mirror unit 11 is arranged on the optical path N1 by this rotational action.

The first lamp house 9 causes light from the light source 9a to enter the mirror unit 11 via a floodlight tube 9b that leads the light to a predetermined direction. The floodlight tube 9b is provided with: a measurement stop 90 (field stop) that is provided at a field stop position (a position conjugate with a specimen placement surface of the stage 3) of the floodlight tube 9b and formed with a stop hole 90a having a circular aperture; a light control unit 91 that is provided between the measurement stop 90 and an end portion thereof on a light source 9a side and has a plurality of light control filters 91a, which adjust light quantities of light from the light source 9a; and a lens 92 that is provided at an end portion thereof at a side different from the first lamp house 9 of the floodlight tube 9b and condenses light, which has passed through the stop hole 90a of the measurement stop 90. The light control unit 91 performs light control, under control by a later described control unit 30, by arranging in the floodlight tube 9b any light control filter 91a of the plurality of light control filters 91a. In this comparative embodiment, an optical system is described as being formed by arranging only one lens 92 in the floodlight tube 9b, but the optical system may be formed of a plurality of lenses.

The reflected illumination optical system 10 has: an excitation filter 10a that transmits only light of a predetermined wavelength as the reflected illumination light (excitation light); a dichroic mirror 10b that reflects and irradiates to the specimen S light of a wavelength corresponding to the excitation light and transmits light of a wavelength corresponding to the observation light from the specimen S; and an absorption filter 10c that transmits only a predetermined fluorescent component of the observation light that has transmitted through the dichroic mirror 10b.

Further, the casing unit 2a has: a tube lens 13 that forms an image of the observation light (fluorescence) from the specimen S that has transmitted through the mirror unit 11; a half mirror 14 that transmits partial light of light imaged by the tube lens 13 and bends and branches the rest of the light; a mirror 15 that reflects light transmitted through the half mirror 14; and a relay lens 16 that relays the light reflected by the mirror 15. The tube lens 13, the half mirror 14, the mirror 15, and the relay lens 16 form an observation optical system that forms an observation image.

The half mirror 14 bends a part of incident light to a direction perpendicular to the optical path N1, for example. The light bent by the half mirror 14 is connected to the casing unit 2a and taken in by an image obtainment unit (not illustrated) formed of a CCD image sensor or a CMOS image sensor. Thereby, the specimen image taken in by the objective lens 5 is able to be imaged, and stored as image data corresponding to this image.

Further, in the casing unit 2a, the control unit 30 that comprehensively controls operations of the whole microscope 1 is provided. The control unit 30 may be arranged inside the main body unit 2 of the microscope 1, or separately arranged externally to the main body unit 2 of the microscope 1 and electrically connected to the main body unit 2 of the microscope 1 via a signal cable.

The lens barrel unit 2b has: a tube lens 17 that forms an image of light that has passed through the relay lens 16; a prism 18 that changes an optical path of light that has passed through the tube lens 17; and an eyepiece 19 that condenses light of which the optical path has been changed by the prism 18.

The stage 3 is formed of a first member, a second member, and a third member, which are plate-like, for example, and layered over one another in sequence. In the stage 3, for example, with the third member being set as a reference (fixed), the first member and the second member are moved, by a stage operating unit 300, on a plane that is a plate surface of the third member. When this is done, the specimen S is placed on the first member, and the first member and the second member move in directions perpendicular to each other on a plane parallel to their principal planes. Further, the first to third members are each formed with an aperture that includes the optical path N1 when attached to the casing unit 2a. The apertures formed in the first and second members are formed to be of a size including the optical path N1 regardless of the movement of the first and second members. Further, the stage operating unit 300 is formed of, for example, a dial or the like via which amounts of movement of the first and second members are able to be respectively input.

The transmitted-light illumination unit 4 has: a transmitted-light illumination support rod 20 that is attached to the main body unit 2 and extends upward; an arm 21 that extends from a top end of the transmitted-light illumination support rod 20 in a direction perpendicular to a direction in which the transmitted-light illumination support rod 20 extends;

a second lamp house 22 that is provided near a top end of the transmitted-light illumination support rod 20 and on an opposite side of a side to which the arm 21 extends and has a light source 22a, which irradiates transmitted-light illumination light; a condenser lens 23 that condenses the transmitted-light illumination light irradiated from the second lamp house 22 to be focused on the specimen S; a condenser holder 24 that is attached to an approximate central portion of the transmitted-light illumination support rod 20 and detachably holds the condenser lens 23; and a condenser focusing operation unit 25 that is provided on a lateral side of the transmitted-light illumination support rod 20 and performs focusing operations of the condenser lens 23 by vertically moving the condenser holder 24.

Inside the arm 21, a mirror 26 is provided, which reflects light irradiated from the second lamp house 22 and bends the reflected light to an optical axis direction (optical path N1 direction) of the condenser lens 23.

The control unit 30 is communicatably connected to the processing device 40. The processing device 40 comprehensively controls operations of the microscope 1. The processing device 40 is configured by using a CPU or the like, controls the entire processing device 40 and parts included in the processing device 40, and performs, in response to an instruction signal from an external device, transfer or the like of instruction information and data corresponding to the instruction signal to the control unit 30 of the microscope 1 and controls the operations of the microscope 1.

The processing device 40 has: a measurement unit 41 that generates a measurement value of an intensity of excitation light based on an electric signal obtained from a later described light intensity detection unit 60; a computation unit 42 that computes, based on the measurement value generated by the measurement unit 41, an intensity of light received by the light intensity detection unit 60; and a storage unit 43 that stores therein various programs to be executed by the microscope 1 and various data to be used during the execution of the programs.

The measurement unit 41 generates a measurement value of an intensity of excitation light based on an input electric signal and outputs the generated measurement value to the computation unit 42.

The storage unit 43 is realized by using a flash memory and a semiconductor memory such as a RAM, which are fixedly provided inside the processing device 40. The storage unit 43 temporarily stores therein information that is being processed. The storage unit 43 may be configured by using a memory card or the like inserted from the outside.

Further, the processing device 40 connects to the display device 50 and causes the display device 50 to display information related to the microscope 1 and the image corresponding to the image data obtained by the above described image obtainment unit.

In the microscope 1 having the above described configuration, for transmitted-light illumination observation, when illumination light from the light source 22a is irradiated to the specimen S via the mirror 26, the illumination light transmits through the specimen S and is taken in by the objective lens 5, and enters the lens barrel unit 2b as observation light. When this happens, the mirror unit 11 is in a state of being withdrawn from the optical path N1. Transmitted-light observation is used when performing bright field observation, phase difference observation, differential interference observation, or the like.

For reflected illumination observation, a wavelength of illumination light from the light source 9a is selected by the excitation filter 10a and the illumination light is bent by the dichroic mirror 10b towards the objective lens 5. When the illumination light bent by the dichroic mirror 10b is irradiated to the specimen S via the objective lens 5, a fluorescent label in the specimen S is excited and generates fluorescence. The fluorescence generated from the specimen S is taken in as an image by the objective lens 5, transmits through the dichroic mirror 10b and absorption filter 10c, and enters the lens barrel unit 2b as the observation light.

When an intensity of the illumination light (excitation light) emitted from the first lamp house 9 and irradiated to the specimen S on the stage 3 is measured (hereinafter, simply referred to as "excitation light intensity measurement), the light intensity detection unit 60, which serves as a detection means for detecting the intensity of the excitation light, is arranged on the specimen placement surface of the stage 3. The light intensity detection unit 60 has a light receiving unit 60a that receives an intensity of light. The light receiving unit 60a is arranged such that the optical path N1 passes therethrough and a light detection unit such as a sensor, which measures the intensity of light, is positioned at a specimen placement surface side of the stage 3. The light receiving unit 60a photoelectrically converts light received via the objective lens 5, generates an electric signal corresponding to an intensity of the received light, and outputs this electric signal to the processing device 40 (the measurement unit 41). The storage unit 43 has a program for the light receiving unit 60a to perform measurement, an area of the aperture of the stop hole 90a of the measurement stop 90, or the like, stored therein. In the first comparative embodiment the intensity of light measured by the light receiving unit 60a refers to an irradiance ($W/m^2$).

When the processing device 40 obtains the electric signal from the light receiving unit 60a, the measurement unit 41 generates a measurement value of an intensity of excitation light based on the input electric signal, and the computation unit 42 computes, based on this measurement value, an intensity of light irradiated to the light intensity detection unit 60. The computation unit 42 obtains, by using Equation (1) below, an area $S_2$ of an image of the stop hole 90a of the measurement stop 90 projected on a light receiving surface of the light receiving unit 60a, where the area of the aperture of the stop hole 90a is $S_1$, a focal distance of the floodlight tube 9b (illumination system) is "f", and a focal distance of the objective lens 5 is f', for example. Since a diameter of the stop hole 90a is known, the area of the aperture of the stop hole 90a is able to be calculated.

$$S_2 = S_1 \times (f'/f)^2 \tag{1}$$

Further, the computation unit 42 obtains an intensity Ps of the illumination light (excitation light) per unit area using Equation (2) below, where the intensity of the light irradiated to the light intensity detection unit 60 is "P", and the intensity of the illumination light (excitation light) per unit area on a light irradiation surface of the light intensity detection unit 60 (specimen S) is Ps.

$$Ps = P/S_2 \tag{2}$$

The computation unit 42 outputs a value of the obtained area $S_2$ to the storage unit 43. The storage unit 43 stores therein the obtained area $S_2$. Further, the processing device 40 may cause the display device 50 to display the value of the obtained area $S_2$. Thereby, the user is able to adjust output of the light source 9a or the like and make the intensity of the illumination light (excitation light) irradiated on the stage 3 equal to a desired intensity. In Equation (1), if f'/f equals "1", $S_2$ of Equation (2) may be replaced with $S_1$, and the intensity Ps of the illumination light (excitation light) per unit area may be obtained based on the area of the aperture of the stop hole 90a and the intensity P of light measured by the light intensity detection unit 60.

According to the above described first comparative embodiment, based on the area of the stop hole 90a of the measurement stop 90, the focal distance of the floodlight tube 9b (illumination system), the focal distance of the objective lens 5, and the intensity of light irradiated to the light intensity detection unit 60, the processing device 40 computes the intensity Ps of the illumination light (excitation light) per unit area of the light irradiation surface of the light intensity detection unit 60 (specimen S), and thus it is possible to know the intensity Ps of the light irradiated to the specimen. Thereby, even for obtaining reproducibility of conditions of intensity measurement, measurement in a state in which an intensity for each measurement is maintained constant is possible.

Further, according to the above described first comparative embodiment, since numerical values of the area of the stop hole 90a of the measurement stop 90, the focal distance of the floodlight tube 9b (illumination system), and the focal distance of the objective lens 5, which are set and stored beforehand, are used, by inputting the intensity of the light irradiated to the light intensity detection unit 60, the intensity Ps is readily obtainable.

According to the above description of the first comparative embodiment, although the intensity Ps is computed under the control of the processing device 40, the intensity Ps may be computed by providing a storage unit and a computation unit in the casing unit 2a under control of the control unit 30 provided in the casing unit 2a.

Further, according to the above description of the first comparative embodiment, the aperture of the stop hole 90a of the measurement stop 90 is circular, but as long as an area thereof is known, the aperture may be angular. Further, the measurement stop 90 may be insertably and removably provided to be selectively arranged according to an observation mode.

Further, according to the above description of the first comparative embodiment, the measurement stop 90 has a single stop hole 90a, but formation of a plurality of stop holes therein is also applicable. In this case, a diameter or an area of the aperture according to each stop hole is prestored in the storage unit 43 and the computation unit 42 computes the intensity Ps by performing computation using the diameter or the area according to the stop hole arranged in the floodlight tube 9b. By selectively using the plurality of stop holes, images of the stop holes projected on the specimen placement surface on the stage 3 also change. Therefore, if the intensity Ps according to the area of the stop hole is obtained as described above, when, for example, the illumination light has an intensity distribution, and an accurate irradiance at a more central portion is to be obtained or an average irradiance is to be obtained, even more accurate observation (measurement) becomes possible.

Modified Example of First Comparative Embodiment

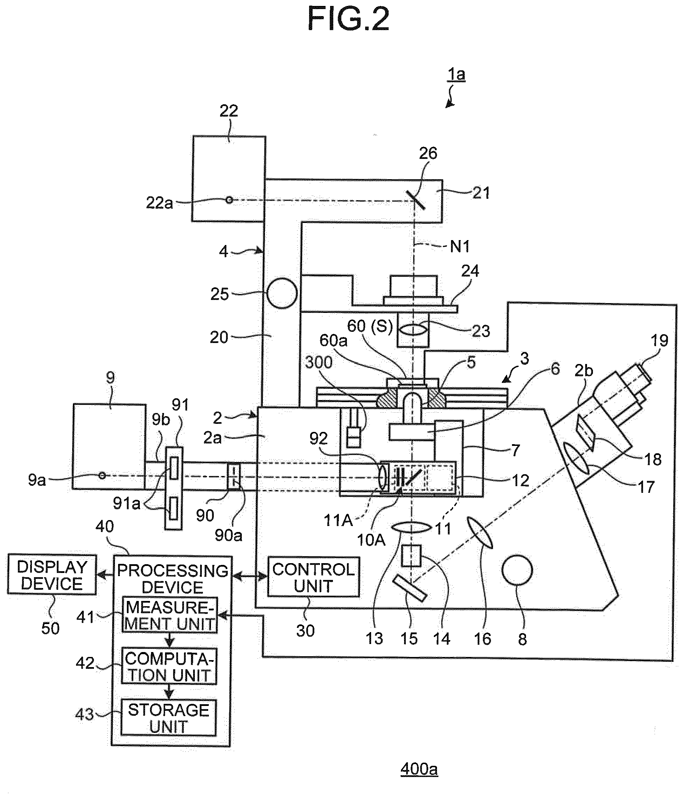

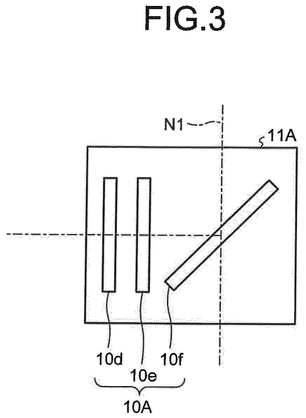

FIG. 2 is a side view schematically illustrating a whole configuration of a microscope system 400a according to a modified example of the first comparative embodiment. FIG. 3 is a side view schematically illustrating a configuration of main parts (mirror unit 11A) of the microscope system 400a according to the modified example of the first comparative embodiment. According to the above description of the first comparative embodiment, the mirror cassette 12 accommodates a plurality of mirror units 11 for fluorescence observation, but in a microscope 1a according to this modified example, one of the plurality of mirror units 11 is replaced with a mirror unit 11A for bright field observation.

The mirror unit 11A holds therein a reflected illumination optical system 10A. The reflected illumination optical system 10A has: an ND filter 10d (neutral density filter) that optically reduces the reflected illumination light irradiated from the first lamp house 9 to a predetermined brightness; an ultraviolet cut filter 10e that cuts off light of a predetermined ultraviolet wavelength band and transmits light of a visible wavelength band; and a half mirror 10f that reflects at least a part of the light transmitted through the ultraviolet cut filter 10e in a direction of the optical axis of the objective lens 5.

By the above configuration, when the mirror unit 11A is arranged on the optical path N1, the reflected illumination light irradiated from the first lamp house 9 is optically reduced to a predetermined brightness by the ND filter 10d in the mirror unit 11A and ultraviolet light thereof is cut off by the ultraviolet cut filter 10e. The light of the visible wavelength band transmitted through the ultraviolet cut filter 10e is reflected by the half mirror 10f in the optical axis direction of the objective lens 5. The reflected illumination light that has been reflected by the half mirror 10f and has passed through the objective lens 5 acts similarly to that of the above described first comparative embodiment, and an observation image is formed.

Therefore, procedural sequence of the measurement of the intensity of the reflected illumination light in bright field observation is as follows. First, the mirror unit 11A is arranged on the optical path N1, the light intensity detection unit 60 is placed on the stage, and switching to reflected brightfield observation is performed. Thereby, the intensity of the reflected illumination light in bright field observation is able to be measured. Thereafter, if a desired mirror unit 11 to be used in fluorescence observation is arranged on the optical path N1, the intensity of the reflected illumination light (excitation light) for fluorescence observation is able to be measured.

As described above, according to the modified example of the first comparative embodiment, effects similar to those of the above described first comparative embodiment are obtainable. Further, in the modified example of the first comparative embodiment, even if a light source 9a suitable for fluorescence observation, for example, a light source such as a mercury lamp is used, by arranging the mirror unit 11A on the optical path N1, illumination light of a brightness and a wavelength optimum for reflected brightfield observation is able to be irradiated to the stage 3.

In the modified example of the first comparative embodiment, although an ultraviolet cut filter that cuts off only an ultraviolet region is used, but a filter that passes only a predetermined region within a visible region may be used.

Second Embodiment

Next, a second comparative embodiment will be described.

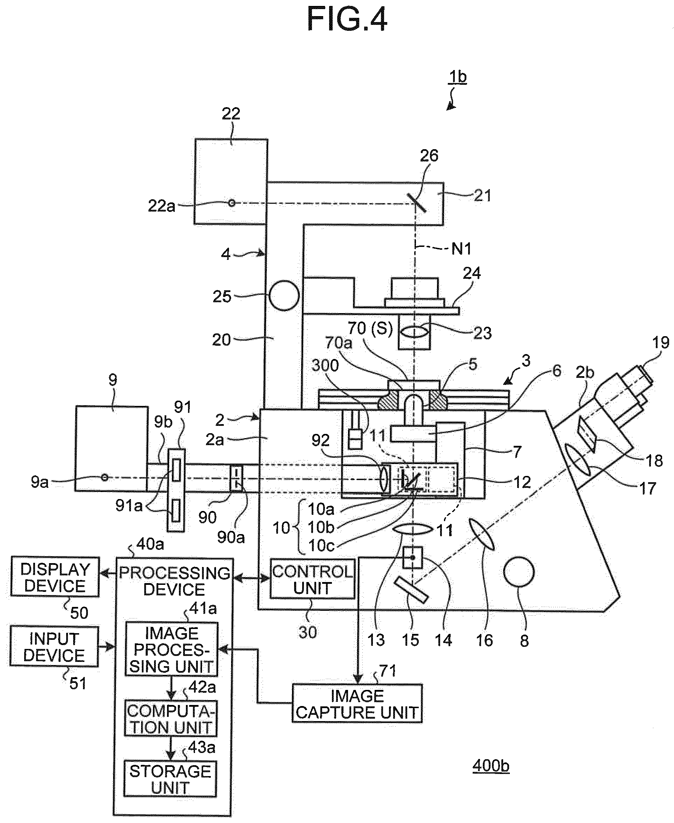

FIG. 4 is a side view schematically illustrating a whole configuration of a microscope system 400b according to a second comparative embodiment. Structural elements that are the same as those of the configuration described with reference to FIG. 1 and the like are appended with the same reference signs. According to the above description of the first comparative embodiment, the intensity of light is measured by the light intensity detection unit 60 to obtain the intensity per unit area, but in the second comparative embodiment, instead of the light intensity detection unit 60, a scale sample 70 is placed on a stage, and an area of an image of the stop hole 90a of the measurement stop 90 is obtained.

The microscope system 400b illustrated in FIG. 4 is configured of, for example, a microscope 1b, a processing device 40a, the display device 50, an input device 52 and an image capture unit 71. The microscope 1b has an image capture unit 71, which takes in the light bent by the half mirror 14, captures an image thereof, photoelectrically converts the light taken in, and outputs the converted light as an image signal. Further, the processing device 40a connected to the control unit 30 is provided with, instead of the computation unit 42 and the storage unit 43: a computation unit 42a and a storage unit 43a, and further has: an image processing unit 41a that performs, on the image signal output by the image capture unit 71, image processing for display by the display device 50. The input device 51 receives input of a activation instruction signal instructing activation of each unit of the microscope 1b. The input device 51 is realized by using an interface such as a keyboard, a mouse, or a touch panel.

The image capture unit 71 is realized by using a CCD image sensor or a CMOS image sensor. By the image capture unit 71 and the image processing unit 41a, a specimen image taken in by the objective lens 5 and an image on a scale sample 70 are imaged, and the processing device 40a causes the storage unit 43a to store therein image data corresponding to these images and the display device 50 to performs image display.

On the scale sample 70, a display surface 70a (reflective surface) on which scale information for distant measurement of the image of the stop hole 90a is displayed is provided. When the scale sample 70 is placed on the stage 3, this display surface 70a is arranged to face the objective lens 5. The objective lens 5 takes in light reflected by this display surface 70a. Further, an arrangement position of the display surface 70a is a position conjugate with the stop hole 90a.

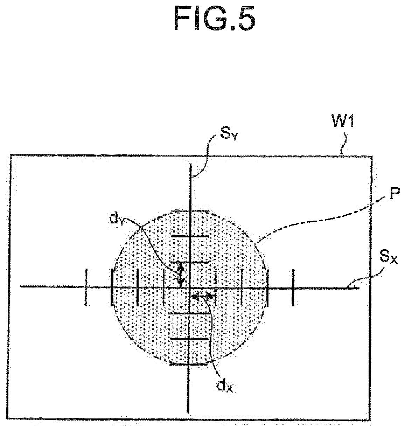

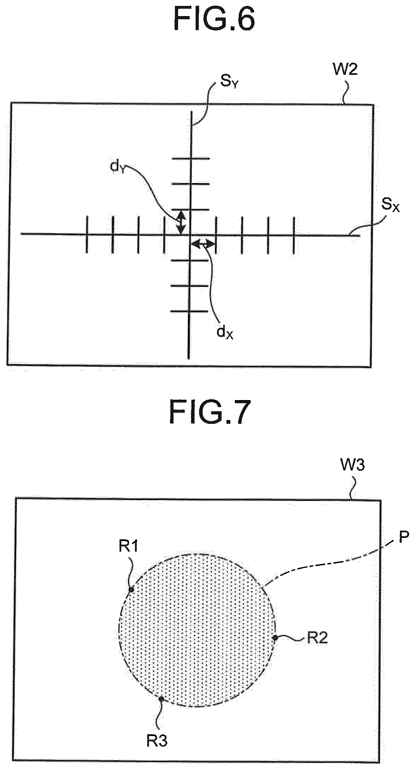

FIG. 5 is a diagram schematically illustrating an example of an image displayed by the display device according to the second embodiment of the present invention. FIGS. 6 and 7 are diagrams illustrating obtainment of an area of an image in the microscope according to the second embodiment of the present invention. In a displayed image W1 illustrated in FIG. 5, the display surface 70a of the scale sample 70 and the image of the stop hole 90a projected on the display surface 70a, which have been imaged by the image capture unit 71 and subjected to the image processing by the image processing unit 41a, are displayed.

On the display surface 70a, like the displayed images W1 and W2, a first scale axis $S_x$ that has a scale and extends linearly and a second scale axis $S_y$ that has a scale, orthogonally intersects with the first scale axis $S_x$, and extends linearly are provided as scale information. According to the description of this second embodiment, as illustrated in FIG. 5, the image "Q" of the stop hole 90a is the image projected on the display surface 70a, and a center of the image "Q" that forms a circular shape coincides with an intersection point between the first scale axis $S_x$ and second scale axis $S_y$.

Further, the scale of the first scale axis $S_x$ is evenly scaled. When obtaining the area of the image of the stop hole 90a, if an interval of this scale is $d_x$, based on the displayed image W2 illustrated in FIG. 6, the computation unit 42a computes, to how many pixels of the image capture unit 71 (for example, a CCD image sensor), this interval $d_x$ corresponds. Specifically, the computation unit 42a obtains the interval $d_x$ of the scale of the first scale axis $S_x$ based on pattern matching by the image processing unit 41a, for example. Thereafter, the computation unit 42a computes, to how many pixels this length corresponds, from a length of the interval $d_x$ of the scale. For example, if the length of the interval $d_x$ is computed to be corresponding to "m" pixels, the computation unit 42a computes a length per pixel $L_x$ as $L_x = d_x/m$. The processing device 40a causes the storage unit 43a to store therein the length $L_x$ per pixel obtained by the computation of the computation unit 42a. The computation unit 42a computes a length per pixel $L_y$, based on a length of an interval $d_y$ similarly for the second scale axis $S_y$. In this second embodiment, the interval $d_x$ of the first scale axis $S_x$ and the interval $d_y$ of the second scale $S_y$ are assumed to be the same.

Next, the computation unit 42a computes an area of the image of the stop hole 90a. Specifically, for example, as illustrated in FIG. 7, with respect to the image "Q" of an image W3 displayed on the display device 50, three points R1 to R3 on an outer edge of the image "Q" are specified via the input device 51. The computation unit 42a computes an area of the image "Q" by calculating a diameter of the image "Q" in the image W3, based on the specified points R1 to R3. If the calculated diameter corresponding to pixels of the image "Q" is "D", and an area corresponding to the pixels of the image "Q" of the stop hole 90a is Gp, since the image "Q" of the stop hole 90a forms the circular shape, the area Gp is found by Equation (3) below.

$$Gp = \pi(D/2)^2 \qquad\qquad (3)$$

Further, by using the length per pixel $L_x$, an actual area "G" of the image of the stop hole 90a is obtainable by Equation (4) below, assuming the diameter "D" to correspond to "n" pixels.

$$G = \pi(D/2)^2$$
$$= \pi(nL_x/2)^2 = \pi(nd_x/2m)^2 \qquad\qquad (4)$$

By the above described computation process, the area of the image of the stop hole 90a of the measurement stop 90 is obtainable. The user is able to irradiate light to a specimen on a stage over desired range by performing adjustment or the like of an irradiation range by checking the obtained area. Even if the stop hole 90a is not circular, computation based on the interval $d_x$ and interval $d_y$ is possible.

According to the above described second embodiment, based on the first scale axis $S_x$, the second scale axis $S_y$, and the image of the stop hole 90a of the measurement stop 90, the area of the stop hole 90a of the measurement stop 90 is computed, and thus, accurate measurement of an area (irradiation range) of light irradiated to a specimen becomes possible, and it becomes possible to know an intensity Ps of light irradiated to the specimen more accurately.

According to the above description of the second embodiment, in FIG. 5, the center of the image "Q" forming the circular shape is consistent with the intersection point between the first scale axis $S_x$ and second scale axis $S_y$, but as long as a range of an image with respect the first scale axis $S_y$ and second scale axis $S_y$ is specifiable and computation based on the interval $d_x$ and interval $d_y$ is possible, consistency therebetween is not always needed.

Further, in the above described second comparative embodiment, although the three points R1 to R3 have been described as being specified on the circumference of the image "Q" in the image W3, as long as the diameter of the image "Q" in the image is able to be calculated, two points may be specified, or four points or more may be specified.

Further, according to the description of the above described second comparative embodiment, the display surface 70a (reflective surface) on which the scale information is displayed is provided and the light reflected from the display surface 70a is taken in by the objective lens 5, but a display surface (reflective surface) that generates scale information by being excited by irradiated light from the light source 9a and generating fluorescence may be provided.

**EP 2 784 565 B1**

Third Comparative Embodiment

Next, a third comparative embodiment will be described. Structures which are the same as those of the above described microscope system will be appended with the same reference signs and the descriptions thereof will be omitted. In the third comparative embodiment, the stage 3 will be described as being placed with a vessel 100 that accommodates the specimen S or a light intensity detection unit 80. The computation of the intensity Ps is performed similarly to the above-described first and second comparative embodiments.

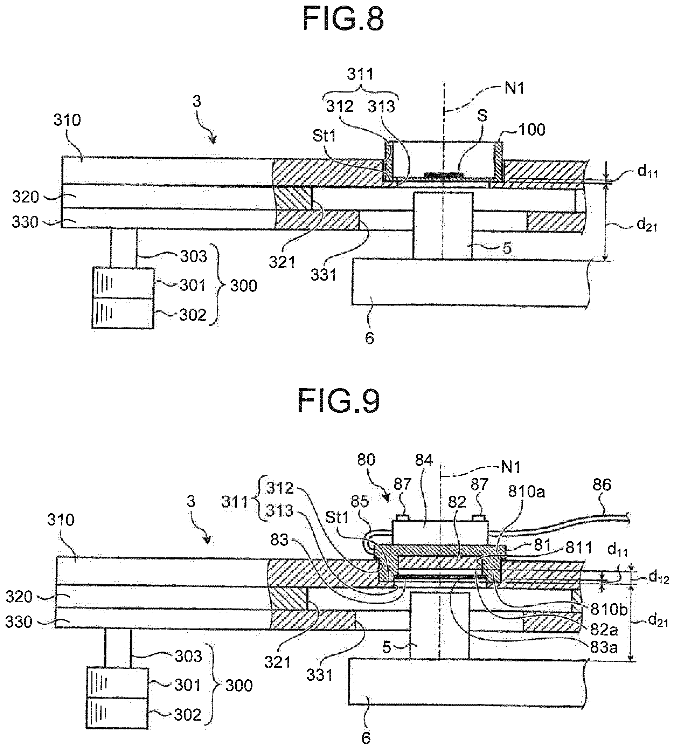

FIG. 8 is a partial cross section diagram schematically illustrating a configuration of the stage 3 according to the third comparative embodiment. The stage 3 according to the third comparative embodiment is, as illustrated in FIG. 8, formed of a first member 310, a second member 320, and a third member 330, which are plate-like and layered over one another in sequence. In the stage 3, for example, with the third member 330 being set as a reference (fixed), the first member 310 and the second member 320 are moved by a stage operating unit 300 on a plane that is a plate surface of the third member 330. When this is done, the specimen S is placed on the first member 310, and the first member 310 and the second member 320 move in directions perpendicular to each other on a plane parallel to principal surfaces thereof. Further, the first to third members 310, 320, and 330 respectively have aperture portions 311, 321, and 331 formed therein, which include the optical path N1 when installed in the casing unit 2a. The aperture portions 311 and 321 formed in the first member 310 and the second member 320 are formed to have a size that includes the optical path N1 regardless of the movement of the first member 310 and the second member 320.

Further, the stage operating unit 300 has: input units 301 and 302, through which amounts of movement of the first member 310 and the second member 320 are able to be input, respectively; and a support member 303 that supports the input units 301 and 302 and transmits the amounts of movement input by the input units 301 and 302 to the first member 310 and the second member 320, respectively. In the third embodiment, the input units 301 and 302 are realized by using rack-and-pinions, for example, and respectively input the amounts of movement of the first member 310 and the second member 320 according to amounts of rotation thereof.

In the stage 3, the aperture portion 311 (positioning means) of the first member 310 has: a first aperture portion 312 that is provided on a top side (surface on a side different from a side on which the second member 320 is layered) of the first member 310 and forms a columnar hollow space; and a second aperture portion 313 that continues to the first aperture portion 312, penetrates through a bottom surface of the first member 310 (surface on the side on which the second member 320 is layered), and forms a columnar hollow space. A diameter of an aperture of the first aperture portion 312 is equivalent to a diameter of an outer circumference of the vessel 100. Further, a diameter of an aperture of the second aperture portion 313 is smaller than the diameter of the aperture of the first aperture portion 312. Central axes of the column shapes of the first aperture portion 312 and the second aperture portion 313 coincide with each other, and a cross section that is cut along a plane perpendicular to these central axes forms a stepped shape.

When the specimen S is to be placed in the stage 3, for example, the vessel 100 that accommodates the specimen S is accommodated in the first aperture portion 312 of the first member 310 (see FIG. 8). Further, a bottom surface of the vessel 100 abuts on a step portion St1 that is formed of the first aperture portion 312 and the second aperture portion 313.

Herein, a thickness of a bottom of the vessel 100 (a distance from the step portion St1 to an end portion at an objective lens 5 side of the specimen S (a light irradiation surface of the specimen S)) is assumed to be $d_{11}$, and a distance from a support surface of the revolver 6, the support surface supporting the objective lens 5, to the step portion St1 is assumed to be $d_{21}$. The distance $d_{21}$ is a distance in a state of being in focus with the specimen S.

FIG. 9 is a partial cross section diagram schematically illustrating a configuration of main parts of the stage 3 according to the third comparative embodiment. When an intensity of illumination light (excitation light) emitted from the first lamp house 9 and irradiated to the specimen S on the stage 3 is to be measured, the light intensity detection unit 80 is placed in the first member 310 in place of the vessel 100.

The light intensity detection unit 80 includes: a main body unit 81 that has a base portion 810a, which is plate-like, and a cylindrical portion 810b, which is cylindrical and extends out from a principal surface of the base portion 810a; a light receiving unit 82 that is arranged inside the cylindrical portion 810b and on the principal surface of the base portion 810a and has a light receiving surface 82a, which receives light via the objective lens 5; a stop member 83 that is provided at a distal end side of the cylindrical portion 810b, is formed with a stop hole 83a that stops down light from the objective lens 5, and is plate-like; a signal conversion unit 84 that is input with the light received by the light receiving unit 82, photoelectrically converts the input light, and generates an electric signal according to an intensity of the received light; a cable 85 that connects the light receiving unit 82 and the signal conversion unit 84; and a cable 86 that connects the signal conversion unit 84 and a processing device 40.

The light intensity detection unit 80 outputs the electric signal generated by the signal conversion unit 84 to the processing device 40 via the cable 86. Further, the signal conversion unit 84 is fixed to the main body unit 81 by a screw 87.

The main body unit 81 has a concave portion 811 formed of the principal surface of the base portion 810a and the hollow space of the cylindrical portion 810b. Further, a diameter of a circle formed by an outer circumference of the cylindrical portion 810b is smaller than a diameter of a circle formed by an outer edge of the base portion 810a. An outer edge of a cross section of the main body unit 81 cut along a plane perpendicular to the principal surface of the base portion 810a is convex shaped. Further, a plane in a direction perpendicular to a central axis of the cylinder shape passes through a distal end surface (a surface in a direction perpendicular to a central axis of the cylinder shape) of the cylindrical portion 810b. That is, the distal end surface of the cylindrical portion 810b is planar.

The light receiving unit 82 is realized by using, for example, a light receiving element such as a Si photodiode. Further, preferably, an aperture center of the stop hole 83a passes a center of the light receiving surface 82a and passes an axis perpendicular to the light receiving surface 82a.

An end surface of the stop member 83, the end surface being at a side different from a light receiving unit 82 side, is arranged at a position shifted towards the base portion 810a by the distance $d_{11}$ from the distal end of the cylindrical portion 810b. Therefore, a height of the specimen S accommodated in the vessel 100, the height being from the most lower portion of, the vessel 100 (the thickness of the bottom of the vessel 100) and the distance from the distal end of the cylindrical portion 810b to the end surface of the stop member 83, the end surface being at the side different from the light receiving unit 82 side thereof are both the distance $d_{11}$, and of the same distance.

Further, the stop member 83 generates fluorescence by illumination light (excitation light) emitted from the objective lens 5. Specifically, the stop member 83 is realized by using: surface coating with a coating or ink that generates fluorescence by light of a predetermined excitation wavelength; a metallic material subjected to a surface treatment that causes generation of fluorescence by light of a predetermined excitation wavelength; or a metallic material that generates fluorescence by light of a predetermined excitation wavelength.

In the light intensity detection unit 80, the distal end of the cylindrical portion 810b abuts on the step portion St1 and the diameter of the outer circumference of the cylindrical portion 810b approximately coincides with a diameter of an aperture formed of a lateral side of the first aperture portion 312. Thereby, the light receiving unit 82 and the stop member 83 are arranged in a state of being positioned with respect to the stage 3. When this happens, a distance from the end surface of the stop member 83 at the side different from the light receiving unit 82 side thereof to the step portion St1 coincides with the above described distance $d_{11}$. That is, the end surface of the stop member 83 coincides with the illumination light irradiation surface of the specimen S.

Further, if a distance from the light receiving surface 82a to the step portion St1 is $d_{12}$, and when a position of the objective lens 5 used is adjusted to be in a state of being in focus with the stop member 83 (at distance $d_{21}$), the stage 3 is moved to adjust the stop member 83 to circumscribe a field thereof, and a center of the light receiving surface 82a is arranged near the optical axis of the objective lens 5, this distance $d_{12}$ is set at a position such that the illumination light emitted from the objective lens 5 is irradiated via the stop member 83 to the light receiving surface 82a over a predetermined irradiation range and with predetermined incident light characteristics. That is, the light receiving surface 82a of the light receiving unit 82 is in a state of being positioned such that the distance from the step portion St1 becomes the above described distance $d_{12}$ by arranging the light intensity detection unit 80 in the aperture portion 311.

Arranging the light receiving surface 82a at an appropriate position by considering a size and incidence characteristics of the light receiving element arranged in the light receiving unit 82 influences a light reception efficiency and the arrangement in the appropriate position increases the light reception efficiency. If the position of the light receiving surface 82a is appropriately arranged with respect to the objective lens 5, a value of an intensity of the illumination light measured by the light intensity detection unit 80 becomes the largest. Therefore, by finely adjusting the position of the light receiving surface 82a such that the value of the intensity of the illumination light becomes the largest, after adjusting the position of the light receiving surface 82a by using the stop member 83, an even more accurate intensity of the illumination light is obtainable.

Further, the light intensity detection unit 80 includes a display unit not illustrated, and a measurement value of an intensity of excitation light of a desired wavelength detected by the light intensity detection unit 80 is displayed on a display screen of that display unit.

According to the above described third comparative embodiment, effects similar to those of the above described first embodiment are obtainable, and further, because the specimen S (vessel 100) or the light intensity detection unit 80 is fitted in the aperture portion 311 on the stage 3 and in a state in which this fitting is complete, an observation position of the specimen S and the position of the light receiving surface 82a of the light receiving unit 82 are made to be positioned in a set arrangement, an intensity of the illumination light irradiated to the specimen S is accurately measurable, and observation of the specimen S and intensity measurement of the illumination light are readily interchangeable.

Further, according to the above described third comparative embodiment, in the state in which the fitting is complete, the irradiation range and incidence characteristics of the illumination light received by the light receiving surface 82a are set to a desired irradiation range and desired incidence characteristics. Thereby, when the specimen S (vessel 100) and the light intensity detection unit 80 are interchanged, a focusing operation for the interchanged target is not required again, and operability thereof is improvable.

Further, according to above described third comparative embodiment, by making the distal end of the cylindrical portion 810b flat shaped, positional reproducibility upon abutment with the step portion St1 is maintainable even more accurately. Further, even a stage not having the aperture portion 311 is able to be placed, and versatility thereof is excellent.

Further, according to the above described third comparative embodiment, in the light intensity detection unit 80, the center of the light receiving surface 82a and the aperture center of the stop hole 83a are arranged on the same axis, and when arranged on the stage, the end surface of the stop member 83 coincides with the position of the illumination light irradiation surface of the specimen S, and thus, even if the stage 3 (the first member 310 and/or the second member 320) is moved by the stage operating unit 300, by moving the stage 3 again to adjust the position of the stop hole 83a with respect to field circumscription, the light receiving surface 82a is able to be readily and appropriately arranged at the irradiation position of the illumination light.

Further, according to the above described third comparative embodiment, because the stop member 83 generates fluorescence by the illumination light (excitation light) emitted from the objective lens 5, an image of the stop member 83 (stop hole 83a) is able to be checked in a state of fluorescence observation. Therefore, positioning of the light receiving surface 82a using the stop member 83 in the state of fluorescence observation is readily possible.

In the third comparative embodiment, the mirror unit 11A according to the modified example of the above described first comparative embodiment may be used. If the mirror unit 11A is arranged on the optical path N1, the reflected illumination light irradiated from the first lamp house 9 is optically reduced to a predetermined brightness by the ND filter 10d in the mirror unit 11A and ultraviolet light thereof is cut off by the ultraviolet cut filter 10e. The light of the visible wavelength band transmitted through the ultraviolet cut filter 10e is reflected by the half mirror 10f in the optical axis direction of the objective lens 5. The reflected illumination light that has been reflected by the half mirror 10f and has passed the objective lens 5 is reflected by the stop member 83. The stop member 83 is made of metal material such as stainless steel. When the light intensity detection unit 80 is arranged at a predetermined position on the optical path N1, observation light reflected by the stop member 83 passes through the objective lens 5 and the half mirror 10f and act similarly to the above described third embodiment, and an observation image of the stop member 83 is formed.

Therefore, if the mirror unit 11A is used, by reflected brightfield observation, a bright image of the stop member 83 is readily obtained, and thus without subjecting the stop member 83 to the surface treatment to generate fluorescence, the stop member 83 is readily recognizable.

First Modified Example of Third Comparative Embodiment

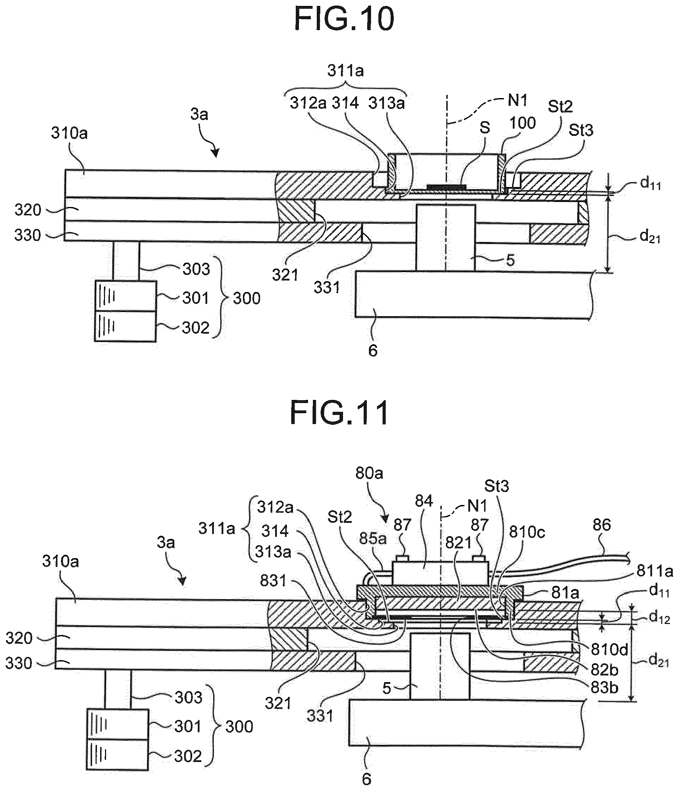

FIGS. 10 and 11 are partial cross section diagrams schematically illustrating a configuration of a stage 3a according to a first modified example of the third comparative embodiment. According to the above description of the third comparative embodiment, the diameter of the outer circumference of the vessel 100 is equal to a diameter of a distal end of a convexity of the main body unit 81, but for a light intensity detection unit 80a of the first modified example of the third comparative embodiment, a diameter of a distal end of a convexity of a main body unit 81a is described as being larger than the diameter of the outer circumference of the vessel 100. In this case, a first member 310a is provided in the stage 3a, in place of the first member 310. In the first member 310a, an aperture portion 311a, which detachably holds the vessel 100 and the distal end of the convexity of the main body unit 81a, is formed.

The aperture portion 311a includes: a first aperture portion 312a, which is provided on a top side (surface on a side different from a side on which the second member 320 is layered) of the first member 310a and forms a columnar hollow space; a second aperture portion 313a, which penetrates through a bottom surface (surface on which the second member 320 is layered) of the first member 310a and forms a columnar hollow space; and a third aperture portion 314, which is provided between the first aperture portion 312a and the second aperture portion 313a and forms a columnar hollow space. The first aperture portion 312a, the second aperture portion 313a, and the third aperture portion 314 have central axes of column shapes thereof that coincide with one another, and a cross section thereof cut along a plane perpendicular to these central axes forms a stepped shape. A diameter of an aperture of the third aperture portion 314 is equivalent to a diameter of a circle formed of an outer circumference of the vessel 100. A diameter of an aperture of the first aperture portion 312a is larger than the diameter of the aperture of the third aperture portion 314. Further, a diameter of an aperture of the second aperture portion 313a is smaller than the diameter of the aperture of the third aperture portion 314. A length of the third aperture portion 314 in a central axis direction of its cylinder is equivalent to the above described distance $d_{11}$.

The light intensity detection unit 80a includes: a main body unit 81a, which has a base portion 810c that is plate-like and a cylindrical portion 810d that continues to the base portion 810c and is cylindrical; a light receiving unit 821, which is arranged inside the cylindrical portion 810d and on a principal surface of the base portion 810c and has a light receiving surface 82b that receives light via the objective lens 5; a stop member 831, which is provided at a distal end of the cylindrical portion 810d, is formed with a stop hole 83b that stops down the light from the objective lens 5, and is plate-like; the signal conversion unit 84, to which light received by the light receiving unit 821 is input and which photoelectrically converts the input light and generates an electrical signal according to an intensity of the received light;

a cable 85a, which connects the light receiving unit 821 and the signal conversion unit 84; and the cable 86, which connects the signal conversion unit 84 and the processing device 40. The main body unit 81a has a concave portion 811a formed of the principal surface of the base portion 810c and a hollow space of the cylindrical portion 810d.

An outer diameter of the cylindrical portion 810d is approximately the same as the diameter of the aperture of the first aperture portion 312a.

When the specimen S (vessel 100) is placed in the aperture portion 311a, the vessel 100 is placed on a step portion St2 formed of the second aperture portion 313a and the third aperture portion 314 and is in a state of being accommodated in the third aperture portion 314. When this is done, an end surface of the specimen S at the objective lens 5 side is positioned away from the step portion St2 by the distance $d_{11}$.

When the light intensity detection unit 80a is to be placed in the aperture portion 311a, the cylindrical portion 810d is placed on a step portion St3 formed of the first aperture portion 312a and the third aperture portion 314 and is in a state of being accommodated in the first aperture portion 312a. When this is done, an end surface of the stop member 831 on a side different from a light receiving unit 821 side is positioned away from the step portion St2 by the distance $d_{11}$ (see FIG. 11).

Thereby, the light receiving unit 821 and the stop member 831 are arranged in a state of being positioned with respect to the stage 3a. A distance from the end surface of the stop member 831 at the side different from the light receiving unit 821 side thereof to the step portion St2 coincides with the above described distance $d_{11}$. That is, the end surface of the stop member 831 coincides with the illumination light irradiation surface of the specimen S.

According to the first modified example of the third comparative embodiment having the above described configuration, similarly to the above described third comparative embodiment, by placing the specimen S (vessel 100) or the light intensity detection unit 80a as appropriate on the stage 3a, observation of the specimen S and measurement of an intensity of illumination light irradiated on the stage 3a are able to be selectively performed. Further, just by installing the vessel 100 and the main body unit 81a in the aperture portion 311a, the specimen S and the light receiving surface 82b are able to be arranged at their appropriate positions respectively.

Second Modified Example of Third Comparative Embodiment

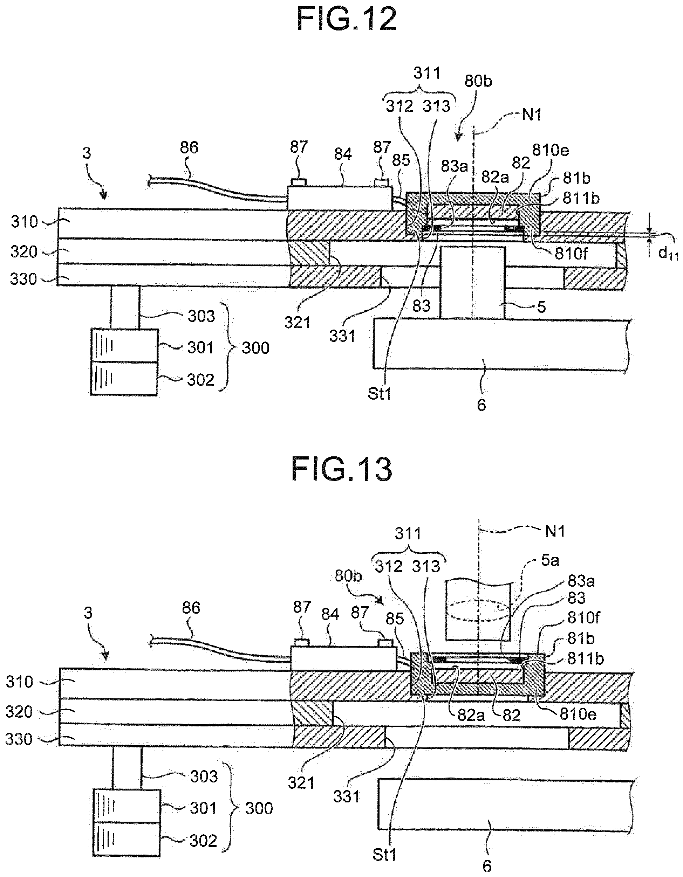

FIGS. 12 and 13 are partial cross section diagrams schematically illustrating a configuration of the stage 3 according to a second modified example of the third comparative embodiment. According to the above description of the third comparative embodiment, the signal conversion unit 84 is fixed to the main body unit 81 in the light intensity detection unit 80, but the signal conversion unit 84 may be used in a state of being separate from the main body unit 81.

A light intensity detection unit 80b according to the second modified example includes: a main body unit 81b, which has a base portion 810e that is plate-like and a cylindrical portion 810f that is cylindrical, extends out from a principal surface of the base portion 810e, and has an outer diameter that is equal to an outer diameter of the base portion 810e; a light receiving unit 82, which is arranged inside the cylindrical portion 810f and on the principal surface of the base portion 810e and has a light receiving surface 82a that receives light via the objective lens 5; the stop member 83, which is provided on a distal end side of the cylindrical portion 810f, is formed with a stop hole 83a that stops down the light from the objective lens 5, and is approximately plate-like; the signal conversion unit 84, to which the light received by the light receiving unit 82 is input, which photoelectrically converts the input light, and which generates an electrical signal according to an intensity of the received light; the cable 85, which connects the light receiving unit 82 and the signal conversion unit 84; and the cable 86, which connects the signal conversion unit 84 and the processing device 40. The main body unit 81b has a concave portion 811b formed of the principal surface of the base portion 810e and a hollow space of the cylindrical portion 810f.

An outer diameter of the cylindrical portion 810f is approximately the same as the diameter of the aperture of the first aperture portion 312.

The stop member 83 is provided in the concave portion 811b, and has an end surface at a side different from the light receiving unit 82 side, the end surface being arranged at a position shifted towards the base portion 810e from a distal end of the cylindrical portion 810f by the distance $d_{11}$.

As illustrated in FIG. 12, in the second modified example, in measuring an intensity of illumination light by placing the light intensity detection unit 80b on the stage 3, when an intensity of illumination light output from the objective lens 5 is to be measured, the cylindrical portion 810f is accommodated in the first aperture portion 312 by abutting the distal end of the cylindrical portion 810f against the step portion St1 such that the light receiving surface 82a faces the objective lens 5. When this is done, a distance from the step portion St1 to the end surface of the stop member 83 is equal to the above described distance $d_{11}$. Thereby, an intensity of the illumination light output from the objective lens 5 is able to be measured similarly by the light receiving unit 82.

For use as an upright microscope (see FIG. 13), a principal surface of the base portion 810e, the principal surface being at a side different from a side continuing to the cylindrical portion 810f, is abutted against the step portion St1 to face an objective lens 5a, to accommodate the base portion 810e and a part of the cylindrical portion 810f in the first aperture portion 312. Thereby, an intensity of the illumination light output from the objective lens 5a is able to be measured by the light receiving unit 82.

As described, according to the second modified example of the third comparative embodiment, the first member 310 is able to hold the light receiving surface 82a in a state in which the light receiving surface 82a is perpendicular to the optical path N1 (optical axis direction of the illumination optical system) and the light receiving surface 82a is directed upward or downward with respect to the optical path N1.

The signal conversion unit 84 is placed at a position different from that of the main body unit 81b on the first member 310. Further, the signal conversion unit 84 may be fixed to the first member 310 by a screw 87 or just placed on the stage 3 without provision of the screw 87.

In the second modified example of the third comparative embodiment having the above described configuration, similarly to the above described third comparative embodiment, by placing the specimen S (vessel 100) or the light intensity detection unit 80b as appropriate on the stage 3, observation of the specimen S and measurement of an intensity of the illumination light irradiated on the stage 3 are able to be performed selectively, and regardless of arrangement of the objective lens with respect to the stage 3, the intensity of the illumination light irradiated on the stage 3 is measurable. Thereby, even if the microscope is of an inverted type or an upright type, the intensity of the illumination light is measurable by using the light intensity detection unit 80b.

First Embodiment

Next, a first embodiment of the present invention will be described. Structures which are the same as those of the above described microscope system will be appended with the same reference signs and the descriptions thereof will be omitted.

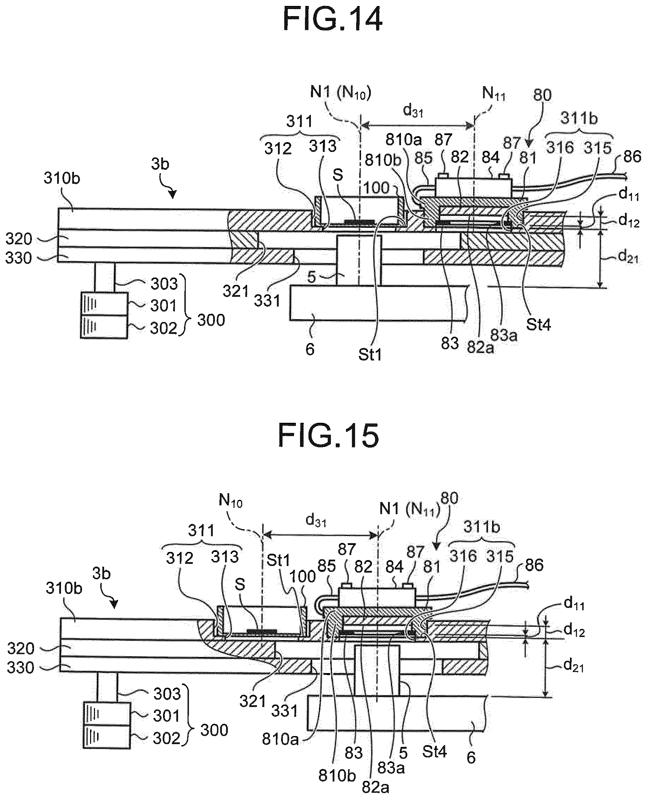

FIGS. 14 and 15 are partial cross section diagrams schematically illustrating a configuration of a stage 3b according to a first embodiment of the present invention. Structural elements that are the same as those of the above described configuration are appended with the same reference signs. According to the above description of the third comparative embodiment, a single aperture portion 311 is provided in the first member 310 of the stage 3 to selectively hold the vessel 100 and the light intensity detection unit 80, but in the stage 3b according to the embodiment, a first member 310b has two aperture portions 311 and 311b that respectively hold the vessel 100 and the light intensity detection unit 80. The aperture portion 311 holds, as described above, any of the vessel 100 and the light intensity detection unit 80 detachably. In this first embodiment, the aperture portion 311 is described as being installed with the vessel 100 and the aperture portion 311b is described as being installed with the light intensity detection unit 80.

The aperture portion 311b includes: a first aperture portion 315, which has a shape similar to that of the above described aperture portion 311, is provided on a top side of the first member 310b (a surface at a side different from a side on which the second member 320 is layered), and forms a columnar hollow space; and a second aperture portion 316, which continues to the first aperture portion 315, penetrates through a bottom surface of the first member 310b (a surface at a side on which the second member 320 is layered), and forms a columnar hollow space. A diameter of an aperture of the first aperture portion 315 is equivalent to a diameter of a circle formed of an outer circumference of each of the vessel 100 and the cylindrical portion 810b. Further, a diameter of an aperture of the second aperture portion 316 is smaller than the diameter of the aperture of the first aperture portion 315. Central axes of the column shapes of the first aperture portion 315 and the second aperture portion 316 coincide with each other, and a cross section that is cut along a plane perpendicular to these central axes forms a stepped shape.

Further, if a distance between a central axis $N_{10}$ of the aperture portion 311 and a central axis $N_{11}$ of the aperture portion 311b is $d_{31}$, for example, when the first member 310b is movable in a direction parallel to a straight line joining the central axis $N_{10}$ of the aperture portion 311 and the central axis $N_{11}$ of the aperture portion 311b, this distance $d_{31}$ is of a value smaller than the maximum amount of movement of the first member 310b.

In the stage 3b, the vessel 100 accommodating the specimen S is accommodated in the aperture portion 311. When this is done, the bottom surface of the vessel 100 abuts on the step portion St1 formed of the first aperture portion 312 and the second aperture portion 313.

Further, in the stage 3b, the light intensity detection unit 80 is accommodated in the aperture portion 311b. When this is done, the cylindrical portion 810b of the light intensity detection unit 80 abuts on a step portion St4 formed of the first aperture portion 315 and the second aperture portion 316.

When observation of the specimen S is performed, by operating the stage operating unit 300 (input unit 301), the first member 310b is moved to a position where the central axis $N_{10}$ of the aperture portion 311 approximately coincides with the optical path N1 (optical axis of the illumination optical system). Thereby, the observation of the specimen S is possible (see FIG. 14).

When measurement of an intensity of illumination light is performed using the light intensity detection unit 80, by operating the stage operating unit 300 (input unit 301), the first member 310b is moved to a position where the center of the stop member 83, that is the central axis $N_{11}$ of the aperture portion 311b coincides with the optical path N1.

Thereby, measurement of the intensity of the illumination light is possible (see FIG. 15).

According to the above described first embodiment, observation of the specimen S or measurement of an intensity of the illumination light by the light intensity detection unit 80 is made possible by: fitting the specimen S (vessel 100) or the light intensity detection unit 80 into the aperture portion 311 or 311b on the stage 3b, to position an observation position of the specimen S and a position of the light receiving surface to an appropriate height in a state where the fitting is complete and moving the first member 310b or the second member 320 of the stage 3b, and thus the intensity of the illumination light irradiated to the specimen S is able to be measured accurately, and the observation of the specimen S and the intensity measurement of the illumination light are readily interchangeable.

According to the above description of the first embodiment, the aperture portion 311 is installed with the vessel 100 and the aperture portion 311b is installed with the light intensity detection unit 80, but the light intensity detection unit 80 may be installed in the aperture portion 311 and the vessel 100 may be installed in the aperture portion 311b. Further, two vessels 100 accommodating specimens S may be respectively installed in the aperture portions 311 and 311b, or two light intensity detection units 80 having light receiving units 82 of different characteristics may be installed therein.

Modified Example of First Embodiment

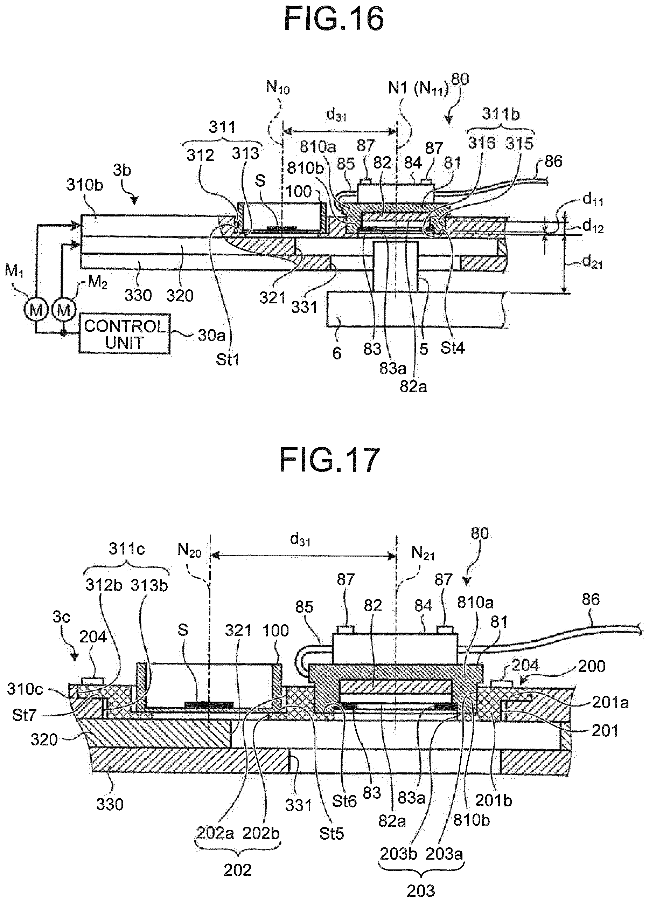

FIG. 16 is a partial cross section diagram schematically illustrating a configuration of the stage 3b according to a modified example of the first embodiment of the present invention. According to the above description of the first embodiment, the first member 310b and the second member 320 are operated by the input units 301 and 302 of the stage operating unit 300, but in place of the stage operating unit 300, motors $M_1$ and $M_2$, which drive the first member 310b and the second member 320 may be included. The motors $M_1$ and $M_2$ are realized by using, for example, pulse motors, and by rotational forces of these motors, the first member 310b and the second member 320 are respectively driven. In the modified example of the first embodiment, a transmission mechanism (not illustrated) that transmits the rotational forces of the motors $M_1$ and $M_2$, a power source supply unit (not illustrated) for the motors $M_1$ and $M_2$, and the like are also included in structural elements thereof.

The motors $M_1$ and $M_2$ are driven under control of a control unit 30a, and move the first member 310b and the second member 320 respectively in predetermined directions (directions perpendicular to each other). The control unit 30a drives the motors $M_1$ and $M_2$ according to an instruction signal input by the user. The input of the instruction signal may be input that made by input to an input unit provided in the processing device 40 (see FIG. 1) or input to a button or a touch panel, which is provided in the casing unit 2a. Further, the instruction signal may be input by an input device connected electrically or via wireless communication to the casing unit 2a.

According to the modified example of this first embodiment, the first member 310b and the second member 320 are electrically moved to desired positions, and thus the specimen S (central axis $N_{10}$) and the light intensity detection unit 80 (central axis $N_{11}$) are able to be readily and infallibly positioned respectively to an observation optical axis position of the objective lens 5 (the optical path N1). Therefore, excellence in operability and positional reproducibility are achieved.

Fifth Embodiment

Next, a second embodiment of the present invention will be described. Structures which are the same as those of the above described microscope system (stage) will be appended with the same reference signs and the descriptions thereof will be omitted.

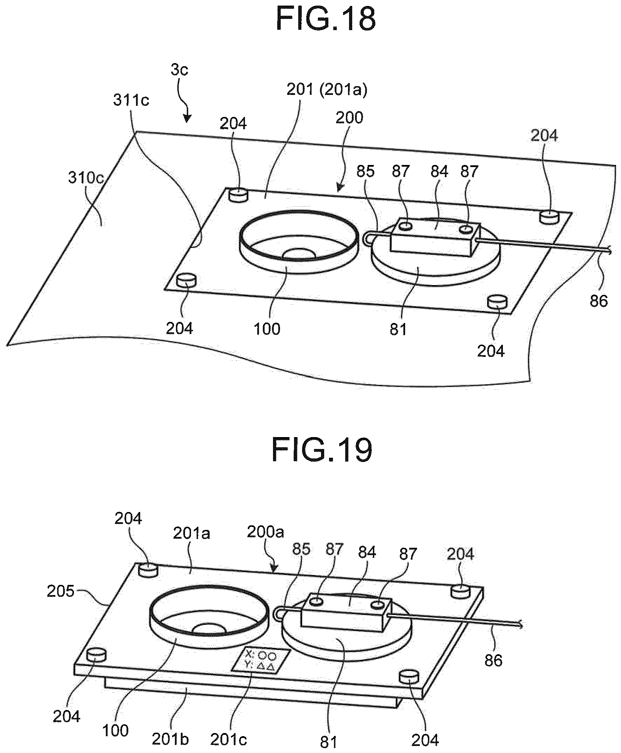

FIG. 17 is a partial cross section diagram schematically illustrating a configuration of a stage 3c according to the second embodiment of the present invention. FIG. 18 is a perspective view schematically illustrating the configuration of the stage 3c according to the second embodiment. Structural elements that are the same as those of the above described configuration are appended with the same reference signs. According to the above description of the embodiment, the first member 310b has the two aperture portions 311 and 311b that respectively hold the vessel 100 and the light intensity detection unit 80 but in the second embodiment, the stage 3c from which an adapter 200 (attachment member) having two aperture portions 202 and 203 is detachable is included. The aperture portions 202 and 203 hold any of the above described vessel 100 and the light intensity detection unit 80 detachably. According to the description of this second embodiment, the aperture portion 202 is installed with the vessel 100 and the aperture portion 203 is installed with the light intensity detection unit 80.

The stage 3c is formed of the above described second member 320 and third member 330, and a first member 310c that is plate-like, which are layered over one another. The first member 310c has an aperture portion 311c formed therein, which detachably holds the adapter 200. The aperture portion 311c includes: a first aperture portion 312b, which is provided on a top side (a surface at a side different from a side on which the second member 320 is layered) of the first member 310c and forms an angular hollow space; and a second aperture portion 313b, which continues to the first aperture portion 312b, penetrates through a bottom surface (a surface at a side on which the second member 320 is layered) of the first member 310c, and forms an angular hollow space.

The adapter 200 is formed of a main body unit 201, which has a base portion 201a that is plate-like and a protrusion portion 201b that continues to the base portion 201a and protrudes in a plate shape from one of principal surfaces of the base portion 201a. The main body unit 201 has aperture portions 202 and 203 that penetrate through principal surfaces of the base portion 201a and the protrusion portion 201b. A shape of an outer edge of the base portion 201a is equivalent to that of an outer edge of the first aperture portion 312b and a shape of an outer edge of the protrusion portion 201b is approximately equivalent to that of an outer edge of the second aperture portion 313b. That is, in the main body unit 201, a cross sectional shape of a cross section cut along a plane perpendicular to the principal surface of the base portion 201a forms a convex shape that is convex at the protrusion portion 201b side.

The aperture portion 202 has a shape similar to that of the above described aperture portion 311, and includes: a first aperture portion 202a, which is provided on a base portion 201a side and forms a columnar hollow space; and a second aperture portion 202b, which continues to the first aperture portion 202a, penetrates through the protrusion portion 201b, and forms a columnar hollow space. A diameter of an aperture of the first aperture portion 202a is equivalent to a diameter of an outer circumference of the vessel 100. Further, a diameter of an aperture of the second aperture portion 202b is smaller than the diameter of the aperture of the first aperture portion 202a. Central axes of the column shapes of the first aperture portion 202a and the second aperture portion 202b coincide with each other, and a cross section that is cut along a plane perpendicular to these central axes forms a stepped shape.

The aperture portion 203 has a shape similar to that of the above described aperture portion 311, and includes: a first aperture portion 203a, which is provided on the base portion 201a side and forms a columnar hollow space; and a second aperture portion 203b, which continues to the first aperture portion 203a, penetrates through the protrusion portion 201b, and forms a columnar hollow space. A diameter of an aperture of the first aperture portion 203a is equivalent to a diameter of a circle formed of an outer circumference of each of the vessel 100 and the cylindrical portion 810b. Further, a diameter of an aperture of the second aperture portion 203b is smaller than the diameter of the aperture of the first aperture portion 203a. Central axes of the column shapes of the first aperture portion 203a and the second aperture portion 203b coincide with each other, and a cross section that is cut along a plane perpendicular to these central axes forms a stepped shape.

The aperture portions 202 and 203 are formed such that a distance between a central axis $N_{20}$ of the aperture portion 202 and a central axis $N_{21}$ of the aperture portion 203 becomes the above described distance $d_{31}$.

In the stage 3c, for example, the vessel 100 accommodating the specimen S is accommodated in the aperture portion 202 of the adapter 200. When this is done, the bottom surface of the vessel 100 abuts on a step portion St5 formed of the first aperture portion 202a and the second aperture portion 202b.

Further, in the stage 3c, for example, the light intensity detection unit 80 is accommodated in the aperture portion 203 of the adapter 200. When this is done, the cylindrical portion 810b of the light intensity detection unit 80 abuts on a step portion St6 formed of the first aperture portion 203a and the second aperture portion 203b.

The adapter 200 is held in the aperture portion 311c of the first member 310c. When this is done, the base portion 201a of the adapter 200 abuts with a step portion St7 formed of the first aperture portion 312b and the second aperture portion 313b and with respect to the principal surface of the second member 320, a gap is provided in a distal end of the protrusion portion 201b to achieve a non-contact state. Further, the base portion 201a has through holes formed therein at edge end sides thereof, and after being accommodated in the aperture portion 311c, the base portion 201a is fixed to the first member 310c by screws 204.

When performing observation of the specimen S, by operating the stage operating unit 300 (input unit 301), the first member 310c is moved to a position where the central axis $N_{20}$ of the aperture portion 202 approximately coincides with the optical path N1 (see FIG. 1 or the like). Thereby, the observation of the specimen S is possible.

When an intensity of the illumination light is measured by the light intensity detection unit 80, by operating the stage operating unit 300 (input unit 301), the first member 310c is moved to a position where the central axis $N_{21}$ of the aperture portion 203 approximately coincides with the optical path N1. Thereby, measurement of the intensity of the illumination light is possible (see FIG. 17).

Like the above described modified example of the first embodiment, under the control of the control unit 30, the first member 310c and the second member 320 may be configured to be moved by the motors $M_1$ and $M_2$.

According to the above described second embodiment, observation of the specimen S or measurement of an intensity of the illumination light by the light intensity detection unit 80 is made possible by: fitting the adapter 200 that holds the specimen S (vessel 100) or the light intensity detection unit 80 into the aperture portion 311c on the stage 3c, to position an observation position of the specimen S and a position of the light receiving surface 82a to an appropriate height in a state where the fitting is complete; and moving the first member 310c or the second member 320 of the stage 3c, and thus the intensity of the illumination light irradiated to the specimen S is able to be measured accurately, and the observation of the specimen S and the intensity measurement of the illumination light are readily interchangeable.

According to the above description of the second embodiment, the vessel 100 is installed in the aperture portion 202, and the light intensity detection unit 80 is installed in the aperture portion 203, but the light intensity detection unit 80 may be installed in the aperture portion 202 and the vessel 100 may be installed in the aperture portion 203. Further, two vessels 100 accommodating specimens S may be respectively installed in the aperture portions 202 and 203, or two light intensity detection units 80 having light receiving units 82 of different characteristics may be installed therein.

Modified Example of Second Embodiment

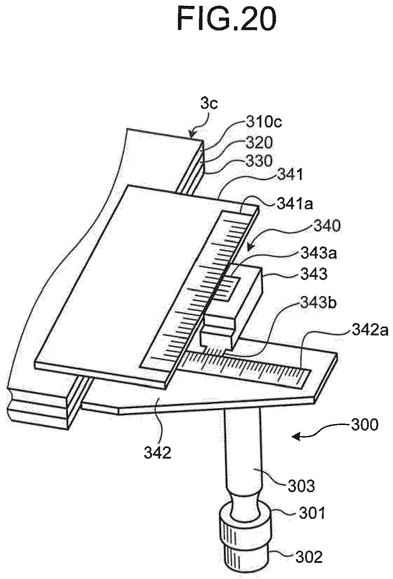

FIGS. 19 and 20 are perspective views schematically illustrating a configuration of the stage 3c according to a modified example of the second embodiment. An adapter 200a illustrated in FIG. 19 is formed of a main body unit 205 that has: the base portion 201a, which is plate-like; the protrusion portion 201b, which continues to the base portion 201a and protrudes in a plate shape from one of principal surfaces of the base portion 201a; and a display portion 202c, which displays, for example, a position of a central axis of the aperture portion 202 or 203. The above described aperture portions 202 and 203 are formed in the main body unit 205.

The stage 3c, as illustrated in FIG. 20, is provided with a positional information display unit 340 that represents each of relative positions (positional information) of the first member 310c and the second member 320 with respect to the third member 330. The positional information display unit 340 includes: a first display member 341, which is attached to the first member 310c and has a first index portion 341a marked with a scale that is positional information at an edge thereof; a second display member 342, which is attached to the third member 330 and has a second index portion 342a marked with a scale that is positional information at an edge thereof; and a pointer unit 343, which is attached to the second member 320 and points respectively to any of scales of the first index portion 341a and the second index portion 342a.

The first index portion 341a is marked with the scale along a moving direction of the first member 310c and numerical values according to this scale. The second index portion 342a is marked with the scale according to a moving direction of the second member 320 and numerical values according to this scale. Since the moving direction of the first member 310c and the moving direction of the second member 320 are orthogonal, the scale of the first index portion 341a and the scale of the second index portion 342a extend in directions orthogonal to each other.

The pointer unit 343 has a first pointer portion 343a that points to any of the scale of the first index portion 341a, and a second pointer portion 343b that points to any of the scale of the second index portion 342a. The first pointer portion 343a and the second pointer portion 343b are respectively provided with scales according to the scales of the first index portion 341a and the second index portion 342a, and function as verniers that point to the scales of the first index portion 341a and the second index portion 342a by any of their scales. The first pointer portion 343a and the second pointer portion 343b may be provided with arrows instead of the scales, and may point only to one point on each scale of the first index portion 341a and the second index portion 342a.

A display portion 201c illustrated in FIG. 19 is marked with scale information of the first index portion 341a and the second index portion 342a. If an X-axis and a Y-axis orthogonal to the scales of the first index portion 341a and the second index portion 342a are assumed to be an X direction and a Y direction, a value of a Y-index pointing to the scale of the first index portion 341a (Y: $\Delta\Delta$) and a value of an X-index pointing to the scale of the second index portion 342a (X: OO) are marked therewith as the scale information. For example, the X-index and Y-index, which are information on a position where the optical path N1 coincides with the central axis $N_{20}$, is marked therewith as the scale information.

The user is able to make the optical path N1 coincide with the central axis $N_{21}$ by moving the first member 310c and the second member 320 while checking the scales of the first index portion 341a and the second index portion 342a.

The display portion 201c may also be marked with information on a position where the optical path N1 coincides with the central axis $N_{20}$, in addition to the information on the position where the optical path N1 coincides with the central axis $N_{21}$.

Fourth comparative Embodiment

Next, a fourth comparative embodiment will be described. Structures which are the same as those of the above described microscope system will be appended with the same reference signs and the descriptions thereof will be omitted.

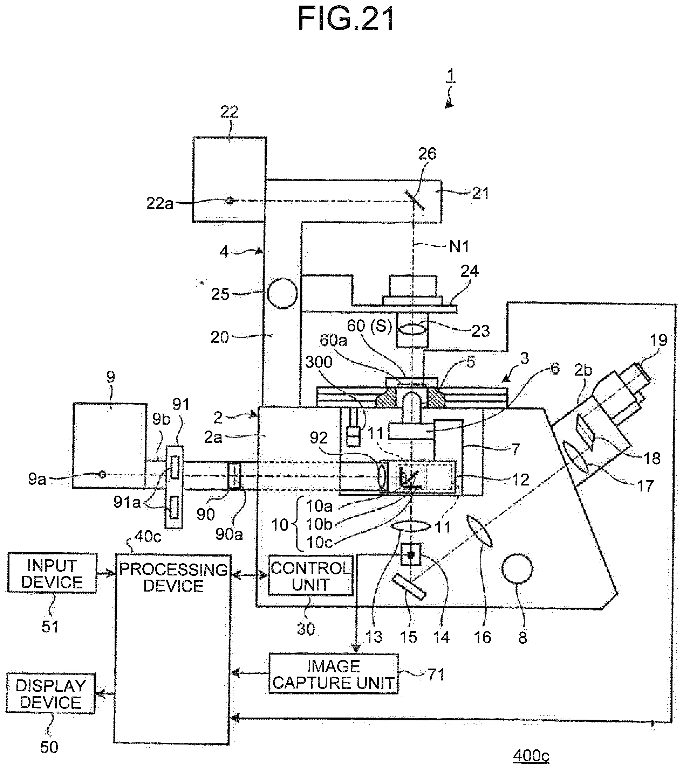

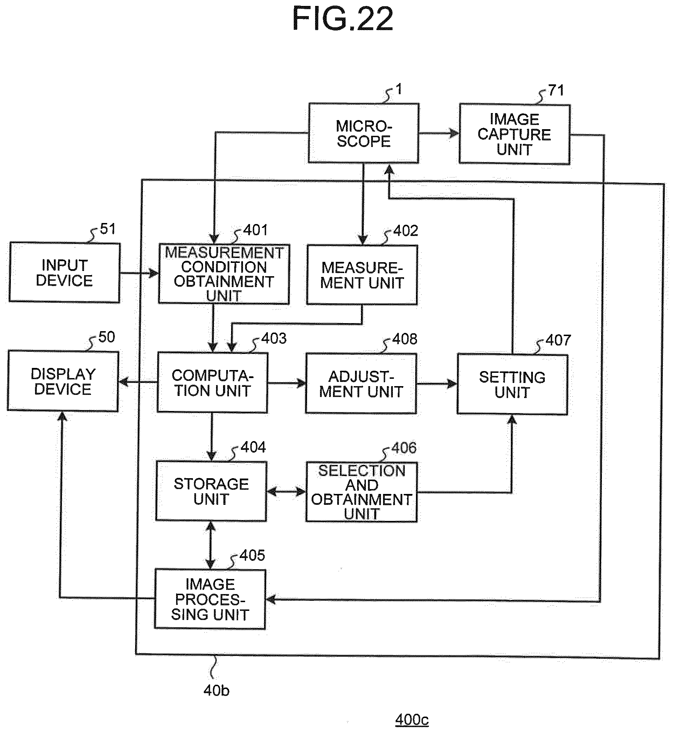

FIG. 21 is a side view schematically illustrating a whole configuration of a microscope system 400c according to the fourth comparative embodiment. FIG. 22 is a functional block diagram illustrating functions of a microscope system 400c according to the fourth comparative embodiment. The microscope system 400c is configured of, for example, the microscope 1, the processing device 40b, the display device 50, an input device 51, and the image capture unit 71.

In the fourth comparative embodiment, the control unit 30 is communicatably connected to the processing device 40b. The processing device 40b comprehensively controls operations of the microscope 1. The processing device 40b connects to the display device 50, and causes the display device 50 to display information related to the microscope 1 and an image corresponding to image data obtained by the above described image capture unit 71.

The processing device 40b is configured by using a CPU, or the like, and includes a measurement condition obtainment unit (obtainment unit) 401, a measurement unit (calculation unit) 402, a computation unit 403, a storage unit 404, an image processing unit 405, a selection and obtainment unit (selection unit and extraction unit) 406, a setting unit 407, and an adjustment unit 408. The processing device 40b controls the whole processing device 40b and each unit included in the processing device 40b, and performs various control instructions with respect to the connected control unit 30 of the microscope 1. Further, the input device 51 is connected to the processing device 40b and by using the input device 51, various parameter, later described various measurement conditions, information on measurement results, and the like are input. The input device 51 is realized by using an interface such as a keyboard, a mouse, or a touch panel, for example.

The storage unit 404 is realized by using a flash memory and a semiconductor memory such as a RAM, which are fixedly provided inside the processing device 40b. Further, the storage unit 404 temporarily stores therein information that is being processed. The storage unit 404 may be configured by using a memory card or the like inserted from the outside. The later described measurement results, a measurement history, measurement conditions, or the like are stored in this storage unit 404.

The measurement condition obtainment unit 401 obtains the measurement conditions. Parameters corresponding to the measurement conditions may be automatically obtained from the microscope 1, or manual input via the input device 51 is also possible. The obtained measurement conditions are transmitted to the computation unit 403.

The measurement conditions obtained automatically or manually are, for example, a type of the microscope (either an upright microscope or an inverted microscope), a magnification of the objective lens 5 for measurement, an observation method (wide field or LSM), a wavelength, an area of irradiation surface, and the like. When the obtainment of the measurement conditions is performed manually, for each item of the measurement conditions, a desired parameter is selectable from a list. Further, input by typing is also possible.

The observation method is, for example, either a laser scanning microscope (LSM) method that uses a laser light source or a wide-field method that uses a wide-field observation microscope and this is obtained automatically or by manual input. In the wide-field method that uses the wide-field observation microscope, an area of irradiation surface for measuring the excitation light is automatically computed by the computation unit 403 and displayed by the display device 50, as described later. This displayed value of the area of the irradiation surface is manually changeable and a more accurate result is able to be calculated.

For a confocal laser scanning microscope, the magnification of the objective lens 5 and a scan mode to be executed in the microscope system 400c are obtained. The scan mode is, for example, "Normal", "Clip", "Line", "Tornado", or "Point". If "Normal" is set as the scan mode, X and Y coordinates of a scan area are obtained. Further, if "Clip", "Tornado", or "Line" is set as the scan mode, a pixel size and a total number of pixels are obtained. If "Line" is set, an NA value is also obtained. If "Point" is set as the scan mode, there are no numerical values to be obtained.

The wavelength to be obtained is a wavelength to be used in each observation method. For example, for the wide-field method using the wide-field observation microscope, an intermediate wavelength of the mirror unit 11 installed in the microscope 1 is obtained. For the LSM method, a wavelength of laser light irradiated from the laser light source is obtained.

If each of the above measurement conditions is obtained by manual input, to make input values of the wavelength and NA selectable from lists, lists of input values previously input are preferably prestored. Further, the measurement conditions that resulted in success of the measurement may be displayed on a measurement condition input screen or the like as default values when a next measurement is performed.

When start of intensity measurement of excitation light is instructed, in the light intensity detection unit 60, the light receiving unit 60a photoelectrically converts light received via the objective lens 5 and generates an electric signal, and outputs this electric signal to the measurement unit 402. The measurement unit 402 generates a measured value of the intensity of the excitation light according to the input electric signal, and outputs the generated measured value to the computation unit 403.

The computation unit 403 obtains from a reference table or the like that is prepared beforehand optical characteristics of the microscope 1 based on the wavelength obtained by the measurement condition obtainment unit 401. The reference table for obtaining the optical characteristics records therein, for example, an area of the aperture of the stop hole 90a of the measurement stop 90 or the like.

Further, the computation unit 403 computes an area of the irradiation surface of the excitation light based on the observation method and the magnification of the objective lens 5, which are obtained by the measurement condition obtainment unit 401. If the area of irradiation surface is manually input, the following computation is executed using that area of irradiation surface.

Hereinafter, an example of a method of computing the area of irradiation surface is described. As described above, for example, if the area of the aperture of the stop hole 90a is $S_1$, the focal distance of the floodlight tube 9b (illumination system) is "f", and the focal distance of the objective lens 5 is f', the area $S_2$ of the image of the stop hole 90a of the measurement stop 90 projected on the light receiving surface of the light receiving unit 60a is obtained by Equation (1) above.

Thereafter, based on the obtained optical characteristics, the measured value of the intensity of the excitation light input from the measurement unit 402 is corrected, and by dividing the corrected measured value by the computed area of irradiation surface, an irradiance (W/m$^2$) of the illumination light (excitation light) per unit area is calculated and output as a measurement value to the display device 50 and the storage unit 404. Further, as necessary, the measurement value is also output to the adjustment unit 408. The measurement value is able to be displayed as a radiant flux (W), rather than the irradiance. For example, if the observation method is the LSM method, and the scan mode is "Point", the measurement value of the radiant flux (W) as a unit is output.

The measurement value calculated as above is stored as a measurement result in the storage unit 404. The calculated measurement result is able to be stored with the measurement conditions, as the measurement history. Measurement date and time and comments may be input separately, and included in the measurement history of the measurement results. Further, more than one measurement result in the measurement history may be selected and stored with the corresponding measurement conditions in a file. The stored file is also readable from another application.

The image processing unit 405 performs predetermined image processing on the image data from the image capture unit 71, causes the display device 50 to perform image display, and stores the image data in the storage unit 404. When storing the image data in the storage unit 404, the image processing unit 405 reads out, from the storage unit 404, the measurement result including settings of the microscope 1 upon image capturing by the image capture unit 71 (for example, the magnification of the objective lens 5, the wavelength of the excitation light, the diameter of the field stop found by the area, and the like) and adds the read out measurement result to the image data. Thereby, association between the measurement result and the image data is achieved.

According to this comparative embodiment, the measurement result and the image data are able to be stored in association with each other as described above, and by selecting the image data added with the measurement result, or by selecting a desired measurement result from the measurement history, the measurement conditions included in that measurement result is able to be reflected to the setting of the microscope 1.

When the image data added with the measurement result is selected in the selection and obtainment unit 406, that image data is read out from the storage unit 404 and the added measurement result is extracted and output to the setting unit 407. If a desired measurement result is selected from the measurement history, that selected measurement result is read out from the storage unit 404 and output to the setting unit 407.

The setting unit 407 reflects, to the settings of the microscope 1, the measurement conditions (for example, the magnification of the objective lens 5, the wavelength of the excitation light, the diameter of the field stop found by the area, and the like) included in the measurement result input from the selection and obtainment unit 406. Accordingly, by selecting the image data or an item in the measurement history, the measurement conditions under which that image data was imaged or the measurement conditions of the time point at which that measurement history was generated are readily restorable.

The selection and obtainment unit 406 may simply cause the display device 50 to display the measurement result instead of outputting the measurement result to the setting unit 407. Further, the measurement result may be stored as a file in a recording medium or printed out.

In the microscope system 400c according to this comparative embodiment, when the past measurement result is read out and set to the microscope 1 as described above, monitoring of a measurement value to keep a difference between the measurement value included in that measurement result and the measurement value by the set measurement conditions within a predetermined range is possible.

In that case, the measurement value newly measured by the measurement conditions set by the setting unit 407 is input from the computation unit 403 to the adjustment unit 408. If a difference value (absolute value) between the measurement value newly measured and the read out set measurement value included in the past measurement result is greater than a predetermined value, the adjustment unit 408 controls the setting unit 407 to change the measurement conditions and other settings (for example, the magnification of the objective lens 5, the wavelength of the excitation light, the diameter of the field stop found by the area, and the like) of the microscope 1 to make the difference value equal to or less than the predetermined value. The adjustment unit 408 performs control to automatically correct the light control filters 91a in the microscope 1 to keep illuminance when the illuminance of the light source 9a or the like has been reduced, for example.

The setting unit 407 sets to the microscope 1, by the control of the adjustment unit 408, image capturing conditions (for example, the magnification of the objective lens 5, the wavelength of the excitation light, the diameter of the field stop found by the area, and the like) obtained by the measurement condition obtainment unit 401. Functions of the setting unit 407 may include, measuring a time period over which measurement is performed while irradiating the excitation light, and if a predetermined time period has passed, displaying on the display device 50 a warning message to not irradiate light too much or controlling a shutter of the optical path to be automatically closed.

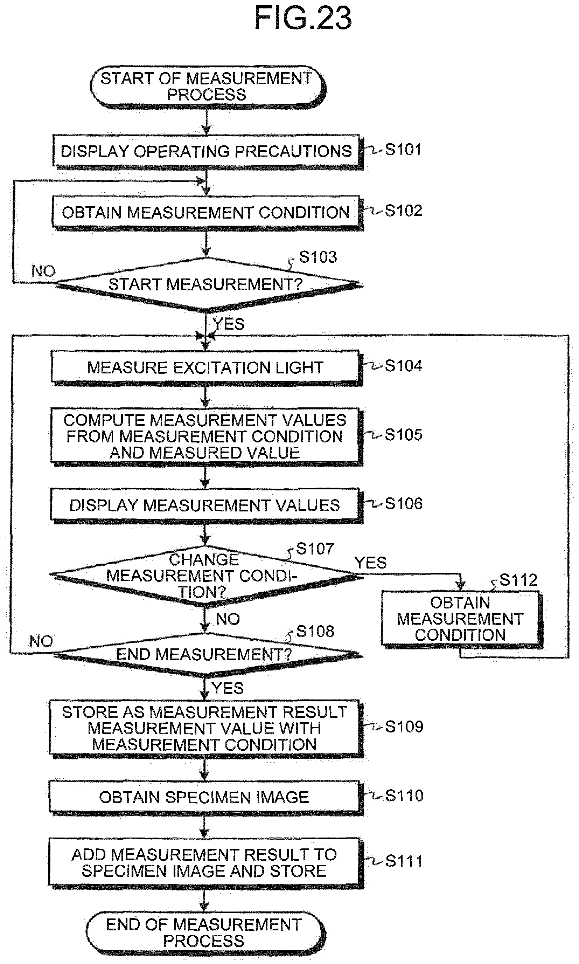

FIG. 23 is a flow chart illustrating a measurement process executed by the processing device 40b according to the fourth comparative embodiment. When performing this measurement process, as an advance preparation, the measurement stop 90 is attached to the microscope 1, or the diameter of the field stop is stopped down to a predetermined size. Further, the light intensity detection unit 60 is prearranged on the specimen placement surface (the light irradiation surface of the specimen) of the stage 3.

At step S101, the processing device 40b causes the display device 50 to display operational precautions or the like of the microscope 1 for intensity measurement of the excitation light. For example, display to confirm that the measurement stop 90 has been installed is performed.

At step S102, the measurement condition obtainment unit 401 obtains the measurement conditions. The obtainment of the measurement conditions are manually or automatically performed, as already described with reference to FIG. 22.

At step S103, the processing device 40b determines whether start of the intensity measurement of the excitation light has been instructed or not. The instruction to start the measurement is input via the input device 51. The processing device 40b proceeds to step S104, if the processing device 40b determines that the start of the measurement has been instructed (step S103: Yes). If the processing device 40b determines that the start of the measurement has not been instructed (step S103: No), the processing device 40b returns to step S102. If the processing device 40b determines that the start of the measurement has not been instructed (step S103: No), the processing device 40b may wait for input of the start instruction simply by repeating step S103 without returning to step S102.

At step S104, the processing device 40b instructs the control unit 30 of the microscope 1 to perform measurement of the excitation light by the light intensity detection unit 60. Upon receipt of this instruction, in the microscope 1, an intensity of the illumination light (excitation light) emitted from the first lamp house 9 and irradiated to the specimen S on the stage 3 is measured by the light intensity detection unit 60 and the electric signal corresponding to the measured excitation light intensity is output to the measurement unit 402. The measurement unit 402 generates a measured value of the excitation light intensity according to the input electric signal, and outputs the generated measured value to the computation unit 403.

At step S105, the computation unit 403 performs a predetermined computation with respect to the measured value obtained in step S104, based on the measurement conditions obtained in step S102, and outputs a result of the computation as a measurement value. This is performed by the above described computation unit 403 and the measurement value is one or both of the irradiance ($W/m^2$) and radiant flux (W).

At step S106, the processing device 40b causes the display device 50 to display the measurement value calculated in step S105.

At step S107, the processing device 40b determines whether or not the measurement conditions obtained in step S102 have been changed or not. The determination is performed, for example, if the measurement conditions are automatically obtained, by obtaining the set state of the microscope 1 from the measurement condition obtainment unit 401 again, the set state being the magnification of the objective lens 5, the wavelength of the excitation light, the diameter of the field stop found by the area, and the like, and comparing the measurement conditions based on that obtained set state and the measurement conditions obtained in step S102. Further, for example, if the measurement conditions are manually input, the determination is performed by detecting the input of the measurement conditions from the input device 51. The processing device 40b proceeds to step S112, if the processing device 40b determines that the measurement conditions have been changed (step S107: Yes). The processing device 40b proceeds to step S108, if the processing device 40b determines that the measurement conditions have not been changed (step S107: No).

At step S108, the processing device 40b determines whether end of the intensity measurement of the excitation light has been instructed or not. The instruction to end the measurement is input via the input device 51. If the processing device 40b determines that end of the measurement has been instructed (step S108: Yes), the processing device 40b ends the measurement and proceeds to step S109. If the processing device 40b determines that end of the measurement has not been instructed (step S108: No), the processing device 40b returns to step S104 and starts measurement of the excitation light under the same measurement conditions again.

At step S109, the processing device 40b associates the measurement value calculated in step S105 with the measurement conditions obtained in step S102 or later described step S112 and store them as a measurement result in the storage unit 404. If there is a file recording a measurement history therein, the measurement result is also recorded in that measurement history. Measurement date and time and comments may be caused to be input separately and added to and stored with the measurement result, or added to and recorded with the measurement history. The comments input may be information for identifying the specimen S and a type of the specimen S (for example, a nerve cell or the like).

At step S110, the processing device 40b causes the image capture unit 71 and image processing unit 405 to image the image of specimen taken in by the objective lens 5 or the image on the light intensity detection unit 60 and generate the image data corresponding to this image to obtain a specimen image. The processing device 40b may cause the display device 50 to display the obtained specimen image.

At step S111, the processing device 40b adds the measurement result stored in step S109 to the specimen image obtained in step S110 and causes the storage unit 404 to store them therein. As described, by adding the measurement result to the specimen image, the image capturing conditions for reproducing the excitation light intensity at the time of capturing the specimen image, for example, the magnification of the objective lens 5, the wavelength of the excitation light, the diameter of the field stop found by the area, and the like are able to be provided as information related to the settings of the microscope 1.

At step S112, the measurement condition obtainment unit 401 obtains the measurement conditions. The obtainment of the measurement conditions are manually or automatically performed, as already described with reference to FIG. 22. Thereafter, step S104 is executed.

In the measurement process illustrated in FIG. 23, after the start of the measurement of the excitation light at Step S103, the end of the measurement is manually instructed to store the measurement result, but a predetermined time interval may be set, and a measurement result may be automatically stored for each set time interval.

Further, in order to prevent too much irradiation of the laser light to the specimen S by long time measurement, after the start of the measurement of the excitation light of step S103, the processing device 40b may automatically cause the measurement to be ended after a predetermined time period has passed.

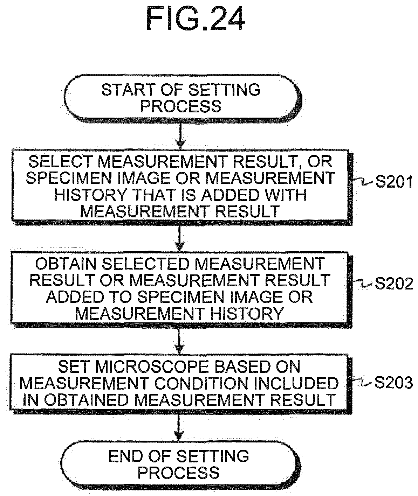

FIG. 24 is a flow chart illustrating a setting process executed by the processing device 40b according to the fourth comparative embodiment. This setting process is a process of reading out the measurement result, the measurement history, the specimen image added with the measurement result, or the like stored in the storage unit 404 in the measurement process illustrated in FIG. 23 and automatically performing setting of the microscope 1 corresponding to measurement conditions corresponding thereto.

At step S201, the processing device 40b receives a selection of: the measurement result stored in the storage unit 404; or the specimen image added with the measurement result; or the measurement history. This selection is performed by the processing device 40b causing the display device 50 to display the measurement results stored in the storage unit 404, the specimen images added with the measurement results, or the measurement history, which are/is selection candidates, and the user referring to them and operating the input device 51.

At step S202, the processing device 40b reads out, from the storage unit 404, the measurement result, the specimen image added with the measurement result, or the measurement history, which is selected at step S201. If the specimen image added with the measurement result or the measurement history is read out, the measurement result added thereto is extracted and obtained. The obtained measurement result is output to the setting unit 407.

At step S203, the setting unit 407 sets, to the microscope 1, the measurement conditions (for example, the magnification of the objective lens, the wavelength of the excitation light, the diameter of the field stop found by the area, and the like), based on the measurement conditions included in the measurement result obtained in step S202. By performing the setting of the microscope 1 based on the measurement conditions included in the measurement result, the settings at the time of measurement of that measurement result are restorable.

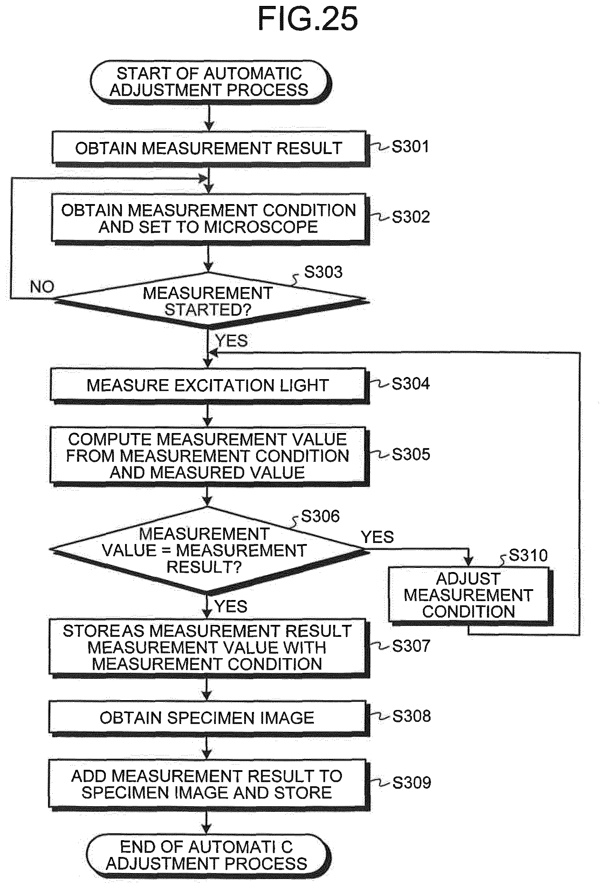

FIG. 25 is a flow chart illustrating an automatic adjustment process executed by the processing device 40b according to the fourth comparative embodiment. This automatic adjustment process is a process for restoring the measurement value included in the measurement result used in the restoration, when the measurement conditions are automatically set like in the setting process illustrated in FIG. 24. That is, in the setting process illustrated in FIG. 24, the measurement conditions are restored, but in this automatic adjustment process, the measurement value is restored.

At step S301, the processing device 40b obtains the measurement result. This process is the processes of steps S201 and S202 of FIG. 24. At step S302, similarly to step S203 of FIG. 24, setting of the microscope 1 is performed based on the measurement conditions included in the measurement result obtained in step S301.

At step S303, the processing device 40b determines whether start of the intensity measurement of the excitation light has been instructed or not. The processing device 40b proceeds to step S304, if the processing device 40b determines that the start of the measurement has been instructed (step S303: Yes). If the processing device 40b determines that the start of the measurement has not been instructed (step S303: No), the processing device 40b repeats step S303 and waits for input of a start instruction.

Step S304 and step S305 are processes similar to those of step S104 and step S105 of FIG. 23, and the processing device 40b causes the microscope 1 to perform intensity measurement of the excitation light to obtain as the measurement value both or one of an irradiance ($W/m^2$) of the illumination light (excitation light) per unit area and a radiant flux (W).

At step S306, the processing device 40b compares the measurement value obtained in step S305 and the measurement value included in the measurement result obtained in step S301, and proceeds to step S307 if they are substantially equal to each other (a difference value between the two is within a predetermined range) (step S306: Yes). If they are substantially different from each other (the difference value between the two is greater than the predetermined range) (step S306: No), step S310 is executed.

The processes from step S307 to step S309 is similar to the processes from step S109 to step S111 of FIG. 23.

At step S310, the adjustment unit 408 adjusts the measurement conditions. The adjustment unit 408 controls the setting unit 407 to change the measurement conditions and other image capturing conditions (for example, the magnification of the objective lens 5, the wavelength of the excitation light, the diameter of the field stop found by the area or the like, and the like) to the settings of the microscope 1 so that the difference value (absolute value) between the newly measured measurement value and the measurement value included in the set past measurement result becomes equal to or less than a predetermined value. The setting unit 407 sets the magnification of the objective lens of the microscope 1, the wavelength of the excitation light, the diameter of the field stop found by the area or the like, and the like, under the control of the adjustment unit 408. Thereafter, step S304 is executed. According to the above described fourth comparative embodiment, when measuring an intensity of the illumination light (excitation light), by obtaining the measurement conditions, and measuring the intensity of the illumination light (excitation light) using the obtained measurement conditions, the obtained measured value is correctable based on the measurement conditions. Further, by computing the area of the irradiation surface based on the measurement conditions, the intensity of the illumination light (excitation light) per unit area of the light irradiation surface is able to be output as the measurement value. Thereby, the measurement value of the intensity of the illumination light in consideration of the optical characteristics of the microscope and the area of the irradiation surface is obtainable.

Further, the obtained measurement value and the measurement conditions are storable together as the measurement result, and the measurement conditions for obtaining that measurement value is able to be readily referenced. Further, because the measurement result is storable being added to the specimen image obtained by the specimen observation under those measurement conditions, the measurement conditions under which the specimen image has been imaged are able to be readily referenced.

Further, a plurality of measurement results are storable as the measurement history. In that case, by additionally recording measurement date and time of each measurement result and identification information, a type, and the like of the specimen S, retrieval of a measurement result at a later day becomes easy. Further, if a similar specimen S is to be observed, measurement conditions that are the same as the previous ones are able to be retrieved easily.

Further, according to the above described fourth comparative embodiment, by selecting a desired measurement result from the specimen images added with the measurement results or from the measurement history, a corresponding measurement result is able to be read out. Further, the measurement conditions included in the read measurement result are able to be automatically set to the microscope. As a result, for example, by giving the specimen image added with the measurement result to another user, the another user is able to know the measurement conditions under which that specimen image was imaged, and to set them readily to the microscope.

Further, according to the above described fourth comparative embodiment, the settings of the microscope are automatically adjustable to reproduce the measurement value included in the read measurement result. As a result, even if the measurement result is read out by a microscope different from the microscope for which the measurement value has been stored, an intensity of excitation light that is the same as that obtained at the time of generating that measurement result is readily reproducible.

Modified Example of Fourth Comparative Embodiment

In a modified example of the fourth comparative embodiment, the computation of the area of the irradiation surface by the computation unit 403 is performed by a method different from that of the fourth comparative embodiment. According to the description of the fourth comparative embodiment, the light intensity detection unit 60 measures the intensity of light to obtain the intensity per unit area, but in the modified example of the fourth comparative embodiment, like in the above described second comparative embodiment, in place of the light intensity detection unit 60, a scale sample 70 is placed on the stage to obtain an area of the image of the stop hole 90a of the measurement stop 90.

To obtain the area of the image of the stop hole 90a, the computation unit 403 computes, to how many pixels of the image capture unit 71 (for example, CCD image sensor) the interval $d_x$ illustrated in FIG. 5 corresponds. Specifically, for example, the scale interval $d_x$ of the first scale axis $S_x$ is obtained by performing pattern matching by the image processing unit 405. Thereafter, from a length of the interval $d_x$, the computation unit 403 computes to how many pixels this length corresponds. For example, if the length of the interval $d_x$ is computed to correspond to "m" pixels, the computation unit 403 computes the length $L_x$ per pixel as $L_x = d_x/m$. The processing device 40b causes the storage unit 404 to store therein the length $L_x$ per pixel obtained by the computation by the computation unit 403. The computation unit 403 computes the length per pixel $L_y$, based on the length of the interval $d_y$ similarly for the second scale axis $S_y$. In this modified example of the sixth embodiment, the interval $d_x$ of the first scale axis $S_x$ and the interval $d_y$ of the second scale axis $S_y$ are assumed to be the same.

Next, the computation unit 403 computes an area of the image of the stop hole 90a. Specifically, for example, with respect to the image W1 displayed on the display device 50, both ends of the image "Q" on the first scale axis $S_x$ are specified by the input device 51. If the distance between the specified ends is "D" and the area of the image of the stop hole 90a is "G", since the image of the stop hole 90a is circular, "D" is found by Equation (5) below.

$$G = \pi(D/2)^2 \qquad\qquad (5)$$

Further, by using the length $L_x$ per pixel, assuming the distance "D" corresponds to "n" pixels, "G" is found by

Equation (6) below.

$$G = \pi(D/2)^2$$
$$= \pi(nL_x/2)^2 = \pi(nd_x/2m)^2 \qquad (6)$$

By the above described computation process, the area of the image of the stop hole 90a of the measurement stop 90 is obtainable. The user is able to irradiate light to the specimen S on the stage over a desired range by performing adjustment or the like of an irradiation range by checking the obtained area. Even if the stop hole 90a is not circular, computation based on the interval $d_x$ and interval $d_y$ is possible.

Further, if all or part of the processes of the fourth comparative embodiment are executed by software, by a measurement program stored in the storage unit 404 being read out by the processing device 40b and executed, corresponding software processes are realized. Further, such a measurement program may be recorded in a recording medium. The recording medium that stores this program is not limited to a flash memory, and may be an optical recording medium such as a CD-ROM or a DVD-ROM, a magnetic recording medium such as an MD, a tape medium, or a semiconductor memory such as an IC card. Further, the measurement program, of course, includes that obtained from an external recording medium via a network, for example, that downloaded from a web page.

In the above described embodiments and comparative embodiments, a configuration including at least the stage 3, the first lamp house 9, the light intensity detection unit (any of the light intensity detection units 60 and 80 and the scale sample 70), the measurement stop 90, and the computation unit (any of the computation units 42, 42a, and 403) corresponds to "measurement apparatus".

Further, in the above described embodiments and comparative embodiments, the configuration of an inverted microscope has been described as an example, but the present invention is applicable to an upright microscope or to, for example, an image capture apparatus including an objective lens that magnifies the specimen, an image capture function of capturing an image of a specimen via the objective lens, and a display function of displaying the image, for example, a video microscope or the like. Further, the above described microscope may have a configuration without the transmitted-light illumination unit 4. In other words, a microscope for performing only reflected illumination observation is also applicable.

As described above, a measurement apparatus according to the present invention is useful for adjusting an intensity (irradiance) of light irradiated to a specimen to an intensity as set because it is possible to know the intensity (irradiance) of light irradiated to a specimen accurately.

Additional advantages and modifications will readily occur to those skilled in the art. Therefore, the present invention in its broader aspects is not limited to the specific details and representative embodiments illustrated and described herein.

**Claims**

1. A measurement apparatus, comprising:

   a holding unit (3) that holds at least a specimen to be observed;
   an illumination unit (9) that emits illumination light to be irradiated to the specimen, the illumination unit (9) comprising

      a light source (9a) that emits the illumination light, and
      a floodlight tube (9b) that leads the illumination light to a predetermined direction via an optical system;

   a detection unit (80) that is arrangeably provided in the holding unit and detects an intensity of the illumination light on a light irradiation surface of the specimen;
   a field stop (90) that is formed with an aperture (90a) and stops down a field on the light irradiation surface by an image of the aperture (90a) that is provided on an optical path of the illumination unit (9), the aperture (90a) through which the illumination light passes and through which an image of the illumination light is projected on the light irradiation surface, and the field stop (90) is detachable with respect to an optical path of the floodlight tube (9b);
   a computation unit (42, 42a, 403) that computes, based on an area of the aperture (90a) of the field stop (90) and the intensity of the illumination light detected by the detection unit (80), an intensity of the illumination light per unit area of the light irradiation surface;
   an objective lens holding unit (6) that interchangeably holds an objective lens (5) and arranges an optical axis of the objective lens (5) on the optical path passing through the specimen, the objective lens (5) taking in at least observation light from the specimen;

an illumination optical system (10) that reflects and irradiates to the specimen light of a predetermined wavelength from the illumination light emitted by the illumination unit (9), and transmits light of a wavelength corresponding to observation light from the specimen;

an observation optical system (13, 14, 15, 16) that forms an observation image from the observation light from the specimen;

a vessel (100) to accommodate the specimen; and the detection unit (80) includes a stop member (83) formed with a stop hole (83a) that stops down light from the objective lens (5) and the stop member is used for adjusting a position of a light receiving surface (82a), wherein

the detection unit (80) has a light receiving unit (82) that receives light of the predetermined wavelength irradiated to the specimen,

the light receiving unit (82) has the light receiving surface (82a), which receives light via the objective lens (5),

the holding unit (3) has a positioning unit (311, 311a, 311b, 311c, 203) that respectively fixes a position of the light irradiation surface in the specimen accommodated in the vessel (100) and a position of a light receiving surface of the light receiving unit (82), in a state of holding the vessel (100) and/or the detection unit (80), and

the computation unit (42, 42a) computes, by using the area of the aperture (90a), the intensity of the illumination light detected by the detection unit (60), a focal distance of the illumination unit (9) and a focal distance of the objective lens (5), the intensity of the illumination light per unit area of the light irradiation surface.

2. The measurement apparatus according to claim 1, wherein the area of the aperture (90a) of the field stop (90) is adapted to be changed.

**Patentansprüche**

1. Messvorrichtung, die umfasst:

eine Halteeinheit (3), die mindestens einen Prüfkörper hält, der beobachtet werden soll;

eine Beleuchtungseinheit (9), die Beleuchtungslicht abgibt, mit dem der Prüfkörper bestrahlt wird, wobei die Beleuchtungseinheit (9) eine Lichtquelle (9a), die Beleuchtungslicht abgibt, und

eine Flutlichtröhre (9b), die das Beleuchtungslicht über ein optisches System in eine vorbestimmte Richtung leitet, umfasst;

eine Erkennungseinheit (80), die einrichtbar in der Halteeinheit vorgesehen ist und eine Intensität des Beleuchtungslichts auf einer Lichtbestrahlungsfläche des Prüfkörpers feststellt;

eine Feldblende (90), die mit einer Apertur (90a) ausgebildet ist und ein Feld auf der Lichtbestrahlungsfläche durch ein Bild der Apertur (90a) abblendet, die auf einem Strahlengang der Beleuchtungseinheit (9) bereitgestellt ist, der Apertur (90a), durch die das Beleuchtungslicht tritt und durch die ein Bild des Beleuchtungslichts auf die Lichtbestrahlungsfläche projiziert wird, und die Feldblende (90) ist bezüglich eines Strahlengangs der Flutlichtröhre (9b) entfernbar;

eine Berechnungseinheit (42, 42a, 403), die aufgrund einer Aperturfläche (90a) der Feldblende (90) und der Intensität des Beleuchtungslichts, das von der Erkennungseinheit (80) festgestellt wird, eine Intensität des Beleuchtungslichts pro Flächeneinheit der Lichtbestrahlungsfläche berechnet;

eine Objektivlinsen-Halteeinheit (6), die auswechselbar eine Objektivlinse (5) hält und eine optische Achse der Objektivlinse (5) auf dem Strahlengang anordnet, der durch den Prüfkörper tritt, wobei die Objektivlinse (5) mindestens Beobachtungslicht vom Prüfkörper aufnimmt;

ein optisches Beleuchtungssystem (10), das Licht einer vorbestimmten Wellenlänge vom Beleuchtungslicht, das von der Beleuchtungseinheit (9) ausgegeben wird, auf den Prüfkörper reflektiert und strahlt, und Licht einer Wellenlänge, die Beobachtungslicht von dem Prüfkörper entspricht, aussendet;

ein optisches Beobachtungssystem (13, 14, 15, 16), das aus dem Beobachtungslicht vom Prüfkörper ein Beobachtungsbild erzeugt;

ein Gefäß (100), das den Prüfkörper aufnimmt; und

die Erkennungseinheit (80) umfasst ein Blendenglied (83), das mit einem Blendenloch (83a) ausgebildet ist, das Licht von der Objektivlinse (5) abblendet, und das Blendenglied wird dazu verwendet, eine Position einer lichtempfangenden Oberfläche (82a) einzustellen, wobei

die Erkennungseinheit (80) eine lichtempfangende Einheit (82) aufweist, die Licht der vorbestimmten Wellenlänge empfängt, das auf den Prüfkörper gestrahlt wird, die lichtempfangende Einheit (82) die lichtempfangende Oberfläche (82a) aufweist, die Licht über die Objektivlinse (5) empfängt, die Halteeinheit (3) eine Positionierungseinheit (311, 311a, 311b, 311c, 203) aufweist, die eine Position der Lichtbestrahlungsfläche im Prüfkörper, der in dem Gefäß (100) untergebracht ist, und eine Position einer lichtempfangenden Oberfläche der lichtempfangenden Einheit (82), jeweils in einem Zustand des Haltens des Gefäßes (100) und/oder der Erkennungseinheit (80) fixiert, und

die Berechnungseinheit (42, 42a) unter Verwendung der Aperturfläche (90a), der Intensität des von der Erkennungseinheit (60) festgestellten Beleuchtungslichts, einer Brennweite der Beleuchtungseinheit (9) und einer Brennweite der Objektivlinse (5) die Intensität des Beleuchtungslichts pro Einheitsbereich der Lichtbestrahlungsfläche berechnet.

**2.** Messvorrichtung nach Anspruch 1, bei der der Bereich der Apertur (90a) der Feldblende (90) so ausgebildet ist, dass sie geändert werden kann.

## Revendications

**1.** Appareil de mesure, comprenant :

une unité (3) de maintien qui maintient au moins un spécimen à observer ;
une unité (9) d'éclairage qui émet une lumière d'éclairage destinée à être projetée sur le spécimen, l'unité (9) d'éclairage comprenant

une source (9a) de lumière qui émet la lumière d'éclairage, et
un tube (9b) de projection qui conduit la lumière d'éclairage dans une direction prédéterminée par l'intermédiaire d'un système optique ;

une unité (80) de détection qui est prévue agencée dans l'unité de maintien et détecte une intensité de la lumière d'éclairage sur une surface de projection de lumière du spécimen ;
un diaphragme (90) de champ qui est formé avec une ouverture (90a) et limite un champ sur la surface de projection de lumière par une image de l'ouverture (90a) qui est prévue sur un chemin optique de l'unité (9) d'éclairage, l'ouverture (90a) à travers laquelle la lumière d'éclairage passe et à travers laquelle une image de la lumière d'éclairage est projetée sur la surface de projection de lumière, et le diaphragme (90) de champ est détachable par rapport à un chemin optique du tube (9b) de projection ;
une unité (42, 42a, 403) de calcul qui calcule, sur la base d'une superficie de l'ouverture (90a) du diaphragme (90) de champ et de l'intensité de la lumière d'éclairage détectée par l'unité (80) de détection, une intensité de la lumière d'éclairage par unité de surface de la surface de projection de lumière ;
une unité (6) de maintien d'objectif qui maintient de manière interchangeable un objectif (5) et agence un axe optique de l'objectif (5) sur le chemin optique passant par le spécimen, l'objectif (5) recevant au moins une lumière d'observation provenant du spécimen ;
un système optique (10) d'éclairage qui réfléchit et projette sur le spécimen une lumière d'une longueur d'onde prédéterminée à partir de la lumière d'éclairage émise par l'unité (9) d'éclairage, et transmet une lumière d'une longueur d'onde correspondant à une lumière d'observation provenant du spécimen ;
un système optique (13, 14, 15, 16) d'observation qui forme une image d'observation à partir de la lumière d'observation provenant du spécimen ;
un récipient (100) pour loger le spécimen ; et
l'unité (80) de détection inclut un élément (83) de diaphragme formé avec un trou (83a) de diaphragme qui limite une lumière provenant de l'objectif (5) et l'élément de diaphragme est utilisé pour ajuster une position d'une surface (82a) de réception de lumière, dans lequel
l'unité (80) de détection a une unité (82) de réception de lumière qui reçoit une lumière de la longueur d'onde prédéterminée projetée sur le spécimen,
l'unité (82) de réception de lumière a la surface (82a) de réception de lumière, qui reçoit une lumière par l'intermédiaire de l'objectif (5),
l'unité (3) de maintien a une unité (311, 311a, 311b, 311c, 203) de positionnement qui fixe respectivement une position de la surface de projection de lumière dans le spécimen logé dans le récipient (100) et une position d'une surface de réception de lumière de l'unité (82) de réception de lumière, dans un état de maintien du récipient (100) et/ou de l'unité (80) de détection, et
l'unité (42, 42a) de calcul calcule, en utilisant la superficie de l'ouverture (90a), l'intensité de la lumière d'éclairage détectée par l'unité (60) de détection, une distance focale de l'unité (9) d'éclairage et une distance focale de l'objectif (5), l'intensité de la lumière d'éclairage par unité de superficie de la surface de projection de lumière.

2. Appareil de mesure selon la revendication 1, dans lequel la superficie de l'ouverture (90a) du diaphragme (90) de champ est adaptée à être changée.

# FIG.1

# FIG.2

400a

# FIG.3

# FIG.4

# FIG.5

# FIG.6

# FIG.7

# FIG.8

# FIG.9

# FIG.10

# FIG.11

## FIG.12

## FIG.13

# FIG.14

# FIG.15

FIG.16

FIG.17

# FIG.18

# FIG.19

# FIG.20

# FIG.21

# FIG.22

# FIG.23

```
        ┌─────────────────────────┐
        │  START OF MEASUREMENT   │
        │        PROCESS          │
        └─────────────────────────┘
                    │
        ┌─────────────────────────────────┐
        │ DISPLAY OPERATING PRECAUTIONS   │──S101
        └─────────────────────────────────┘
                    │
        ┌─────────────────────────────────┐
   ┌───▶│  OBTAIN MEASUREMENT CONDITION   │──S102
   │    └─────────────────────────────────┘
   │                │
   │                          S103
   │  NO      ◇ START MEASUREMENT? ◇
   └──────────
                    │ YES
        ┌─────────────────────────────────┐
        │    MEASURE EXCITATION LIGHT     │──S104
        └─────────────────────────────────┘
                    │
        ┌─────────────────────────────────┐
        │  COMPUTE MEASUREMENT VALUES     │
        │  FROM MEASUREMENT CONDITION     │──S105
        │     AND MEASURED VALUE          │
        └─────────────────────────────────┘
                    │
        ┌─────────────────────────────────┐
        │   DISPLAY MEASUREMENT VALUES    │──S106
        └─────────────────────────────────┘
                    │
                       S107         S112
          ◇ CHANGE              ◇  YES   ┌──────────────┐
          MEASUREMENT CONDI-───────────▶│   OBTAIN     │
             TION?             ◇         │ MEASUREMENT  │
                    │ NO                 │  CONDITION   │
                       S108             └──────────────┘
   NO     ◇ END MEASUREMENT? ◇
   ───────
                    │ YES
        ┌─────────────────────────────────┐
        │ STORE AS MEASUREMENT RESULT     │
        │   MEASUREMENT VALUE WITH        │──S109
        │    MEASUREMENT CONDITION        │
        └─────────────────────────────────┘
                    │
        ┌─────────────────────────────────┐
        │    OBTAIN SPECIMEN IMAGE        │──S110
        └─────────────────────────────────┘
                    │
        ┌─────────────────────────────────┐
        │  ADD MEASUREMENT RESULT TO      │──S111
        │  SPECIMEN IMAGE AND STORE       │
        └─────────────────────────────────┘
                    │
        ┌─────────────────────────┐
        │   END OF MEASUREMENT    │
        │        PROCESS          │
        └─────────────────────────┘
```

# FIG.24

START OF SETTING
PROCESS

SELECT MEASUREMENT RESULT, OR
SPECIMEN IMAGE OR MEASUREMENT
HISTORY THAT IS ADDED WITH
MEASUREMENT RESULT ～S201

OBTAIN SELECTED MEASUREMENT
RESULT OR MEASUREMENT RESULT
ADDED TO SPECIMEN IMAGE OR
MEASUREMENT HISTORY ～S202

SET MICROSCOPE BASED ON
MEASUREMENT CONDITION INCLUDED
IN OBTAINED MEASUREMENT RESULT ～S203

END OF SETTING
PROCESS

# FIG.25

START OF AUTOMATIC
ADJUSTMENT PROCESS

OBTAIN MEASUREMENT RESULT — S301

OBTAIN MEASUREMENT CONDITION
AND SET TO MICROSCOPE — S302

S303
MEASUREMENT
STARTED? — NO

YES

MEASURE EXCITATION LIGHT — S304

COMPUTE MEASUREMENT VALUE
FROM MEASUREMENT CONDITION
AND MEASURED VALUE — S305

S306
MEASUREMENT
VALUE = MEASUREMENT
RESULT? — YES

YES

S310
ADJUST
MEASUREMENT
CONDITION

STORE AS MEASUREMENT RESULT
MEASUREMENT VALUE WITH
MEASUREMENT CONDITION — S307

OBTAIN SPECIMEN IMAGE — S308

ADD MEASUREMENT RESULT TO
SPECIMEN IMAGE AND STORE — S309

END OF AUTOMATI C
ADJUSTMENT PROCESS

**REFERENCES CITED IN THE DESCRIPTION**

**Patent documents cited in the description**

- JP 2003121751 A
- JP 2005352146 A
- JP 2005091701 A
- JP H11258512 B
- US 20110031410 A1